# FASCICULE DE BREVET EUROPEEN

(11) **EP 0 439 532 B1**
(45) Date de publication et mention de la délivrance du brevet: **28.07.1993**
(21) Numéro de dépôt: 89912259.2
(22) Date de dépôt: 20.10.1989
(51) Int. Cl.: B01D 29/50, B01D 35/00, G01N 33/04

(54) **DISPOSITIF DE FILTRATION D'UNE PARALLELE D'UNE PLURALITE D'ECHANTILLONS AVEC CONTROLE AUTOMATIQUE DES VOLUMES FLTRES ET DU COLMATAGE AINSI QU'AVEC INDEXATION DU FILTRE, ET PROCEDE DE FILTRATION**
VORRICHTUNG ZUM PARALLELFILTRIEREN EINER MEHRZAHL VON PROBEN, AUTOMATISCHE KONTROLLE DES FILTRATVOLUMENS UND DER VERSCHMUTZUNG, FILTERINDEXATION UND VERFAHREN ZUM FILTRIEREN
DEVICE FOR THE PARALLEL FILTRATION OF A PLURALITY OF SAMPLES WITH AUTOMATIC CONTROL OF FILTERED VOLUMES AND OF CLOGGING AS WELL AS WITH FILTER INDEXING, AND FILTRATION METHOD

(30) Priorité: 21.10.1988 FR 8813804
(43) Date de publication de la demande: 07.08.1991
(73) Titulaire: BIOCOM, F-91942 Les Ulis Cédex (FR)
(72) Inventeur: BISCONTE, Jean-Claude, F-91640 Briis-sous-Forges (FR)
(74) Mandataire: Ores, Irène
(86) Numéro de dépôt international: FR8900544
(87) Numéro de publication internationale: WO9004445

(56) Documents cités:
- EP-A- 98 534
- EP-A- 131 934
- WO-A-82/03690
- GB-A- 1 317 015
- US-A- 3 540 858

## Description

La présente invention est relative a un dispositif de filtration simultanée et indépendante, à savoir en parallèle, d'une pluralité d'échantillons fluides, liquides ou gazeux, contenant des particules à filtrer, telles que bactéries, cellules ou autres éléments, notamment contenus dans le lait ou le sang, ce dispositif étant destiné à coopérer avec un dispositif d'observation et de comptage des particules filtrées. Il integre un dispositif de contrôle automatique des niveaux filtres et prévient les risques de colmatage.

Actuellement l'analyse des particules de petite taille et contenues en quantité faible et/ou imprevisible se pratique après filtration préalable sur filtres calibrés (du type connus sous les noms de marques de fabriques NUCLEOPORE^{R}, MILLIPORE^{R}, etc...). Ces filtres, réalisés par des moyens très évolués, sont coûteux et nécessitent des précautions d'emploi en raison de leur finesse (parfois inférieure à 10 µm) et de leur fragilité.

On peut citer comme exemple les analyses du secteur agro-alimentaire (lait, bière, eaux minerales, jus de fruits, viandes, etc..) dans lequels la présence inévitable de bactéries doit être contrôlée.
Dans le cas du lait, la méthode de référence est la méthode de culture sur boîte de Pétri qui exige 24 à 48 heures pour produire un résultat. Il existe d'autres moyens plus rapides fondés, le plus souvent, sur une coloration préalable par un fluorochrome, comme l'Acridine orange. Les appareils se répartissent en deux catégories selon que l'analyse est conservative ou non. Les appareils de la deuxième catégorie mesurent (en continu) les bactéries colorées selon des techniques de flux (flow cytometer) ou de répartition sur des disques ou des tambours.

Ces méthodes sont à priori simples, mais ne permettent pas de garder l'échantillon à des fins de vérification, ce qui est indispensable en cytologie humaine. Elles ne permettent pas non plus de mesurer correctement des échantillons dans lesquels les bactéries sont en densité très faible (cas de produits élaborés, pharmaceutiques ou alimentaires) et surtout ceux qui renferment des artefacts ou des bactéries sous des formes d'agrégation très variées (bactérie isolée ou colonies de plusieurs milliers de bactéries).

L'analyse de l'échantillon filtré, à l'inverse, permet de détecter des bactéries présentes en très faible densité et de respecter la diversité des particules présentes. En revanche, les filtres sont coûteux, les opérations longues et délicates et l'analyse de l'échantillon sous microscope est pénible et lente.

L'analyse d'image par ordinateur apporte un début de solution à cette question en automatisant le déplacement de l'échantillon (à l'aide de platines motorisées X-Y et d'un dispositif de focalisation automatique en Z) et en comptant automatiquement les particules.

Dans le cas du lait, les bactéries sont présentes dans des proportions très variables, ce qui contribue à fixer le prix de ce lait acheté au producteur.

Cette densité est comprise entre 5000 bactéries par millilitre et 5000.10⁴ bactéries par millilitre.

En supposant que la quantité filtrée soit identique d'un échantillon à l'autre, la quantité de bactéries présentes dans un champ d'observation sera, par exemple, de 1000 pour un lait chargé et de 1 bactérie tous les 10 champs d'observation pour un lait d'excellente qualité. On comprend donc l'intérêt à moduler la quantité de lait à filtrer, ce qui a priori n'est pas possible puisque précisément seule l'analyse permet de connaître ce paramètre.

La présente invention s'est donc donné pour but de pourvoir à un dispositif de filtration, basé sur des techniques de filtration actuellement connues, qui permet d'obtenir un débit d'analyse d'échantillons répondant aux nécessités de la pratique.

La présente invention a pour objet un dispositif de filtration d'une pluralité d'échantillons fluides, liquides ou gazeux, contenant des particules à filtrer, telles que bactéries, cellules ou autres éléments, notamment contenues dans le lait ou le sang, comprenant :
- au moins un filtre,
- des moyens de filtration simultanée et indépendantes, sur ce même filtre, desdits échantillons fluides,
- des moyens de filtration forcée des échantillons,

lequel dispositif de filtration est caractérisé en ce que lesdits moyens de la filtration simultanée et indépendante des échantillons fluides comprennent :
- au moins un joint comportant une pluralité de perforations ménagées sur toute son épaisseur,
- un premier et un deuxième moyens de serrage étanche de ce joint et du filtre, présentant les perforations destinées à être alignées avec les perforations du joint et à être mises, avec celles-ci, en communication, à une extrémité amont du joint et par interposition dudit filtre, avec une pluralité d'arrivées indépendantes desdits échantillons fluides à filtrer et , à une extrémité aval dudit joint, avec une pluralité de sorties, également indépendantes, de ces échantillons fluides, lesdits moyens de serrage perforés délimitant sur le filtre, par l'intermédiaire du joint, une pluralité de zones de filtration indépendantes et étanches correspondant auxdites perforations, qui sont destinées à être traversées en parallèle par lesdits échantillons fluides sous l'action desdits moyens de filtration forcée, et
- des moyens d'indexage du (ou des) filtre(s).

De plus, le dispositif comprend un module de contrôle automatique de la filtration de chacun des échantillons, d'une part, pour connaître le volume réellement filtré et, d'autre part, pour interrompre la filtration en fonction d'un certain degré de colmatage détecté par la diminution du débit des échantillons filtrés.

En réalité, l'expérience de la Demanderesse montre que le colmatage progressif du filtre donne une bonne indication de la charge en particules et qu'il suffirait de mesurer en continu le débit d'un échantillon filtré pour évaluer cette charge. De plus, une telle surveillance permet d'arrêter la filtration avant que le colmatage complet n'intervienne, ce qui serait dommageable pour la suite des opérations (notamment pour l'opération de coloration).

En outre, le dispositif fonctionne avec des filtres traditionnels, mais insérés dans un support (badge) particulier qui assure l'indexation automatique en position, en vue d'une analyse ultérieure. De plus, ce mode de montage du filtre en assure la manipulation aisée et les possibilités d'archivage. On conçoit le gain de place par rapport au montage habituel des filtres entre lame et lamelle, puisque 1 badge sera équivalent à 50 lames, voire plus.

Le dispositif de contrôle automatique de la filtration et les moyens d'indexation précités seront décrits plus en détail par la suite. Selon une variante préférée de ce mode de réalisation, un deuxième filtre est interposé également entre les extrémités aval des perforations du joint et les sorties indépendantes correspondantes des échantillons, le deuxième filtre ayant une porosité moindre que le filtre disposé en amont, le joint perforé délimitant également sur le deuxième filtre des zones de filtration indépendantes et étanches.

Selon une disposition avantageuse de ce mode de réalisation et de cette variante, le(s) filtre(s) avec le joint perforé sont serrés entre un premier et un deuxième disque comportant chacun un nombre de perforations égal à celui du joint, à savoir égal en nombre desdites arrivées et sorties d'échantillons fluides, les perforations du premier disque de serrage recevant les extrémités aval d'une première pluralité de tuyaux, dont les extrémités amont sont en communication avec des puits de stockage des échantillons fluides à filtrer ménagés dans un bac de stockage, tandis que les perforations du deuxième disque de serrage reçoivent les extrémités amont d'une deuxième pluralité de tuyaux, les perforations du joint et lesdites zones de filtration correspondantes du(des) filtre(s) assurant la continuité entre lesdites première et deuxième pluralités de tuyaux, dont la première est destinée à véhiculer vers le(s) filtre(s) les différents échantillons fluides avant filtration, - sous l'action de moyens de refoulement de ces échantillons fluides, contenus dans lesdits puits de stockage , vers les tuyaux correspondants de ladite première pluralité -, alors que la deuxième pluralité de tuyaux est destinée à véhiculer les échantillons fluides après filtration.

Selon une modalité préférée de cette disposition, lesdits premier et deuxième disques perforés de serrage étanches entre le(s) filtre(s) et le joint perforé font partie intégrante de blocs creux, qui sont disposés l'un en amont, l'autre en aval, avec les disques se faisant face, et qui sont délimités chacun extérieurement par une enveloppe sensiblement cylindrique, à partir de laquelle ils font saillie vers l'extérieur, et intérieurement par une surface tronconique dont une portion plane correspond à l'emplacement de chaque disque de serrage et une portion oblique correspond à une zone parallèlement à laquelle sont acheminées des portions intermédiaires de ladite première pluralité de tuyaux qui remontent des puits de stockage des échantillons fluides à filtrer ménagés dans ledit bac, pour converger vers les perforations du premier disque, alors que les tuyaux de la deuxième pluralité divergent à partir du deuxième disque, chaque bloc présentant une base ouverte, opposée au disque de serrage correspondant, qui est destinée à être obturée par une plaque amovible appliquée dans un premier siège de chaque bloc et comportant un nombre de perforations qui est égal à celui des perforations du joint, - et donc à celui desdites zones de filtration indépendantes et étanches -, les tuyaux de ladite première pluralité traversant la plaque de fermeture du bloc correspondant et étant reliées à des tubes de prélèvement des échantillons fluides à filtrer, par l'intermédiaire desquels ils communiquent avec les puits de stockage correspondants ménagés dans ledit bac.

Conformément à cette modalité, au moins les tuyaux de ladite première pluralité sont maintenus fixes les uns par rapport aux autres à l'aide d'une plaquette en résine, -dans laquelle ils sont emprisonnés et qui s'applique de façon étanche dans un deuxième siège du bloc amont, en dessous du disque de serrage correspondant-, et traversent de façon étanche la plaque amovible, le bloc amont étant appliqué, lui aussi de façon étanche, sur le bac de stockage de manière que la plaque amovible, - elle aussi appliquée de façon étanche sur son siège -, délimite conjointement avec l'enveloppe du bloc amont et l'enveloppe du bac de stockage une chambre étanche dans laquelle est injecté un fluide sous pression par un orifice ménagé dans l'enveloppe du bloc, de préférence en aval de la plaque amovible, qui comporte à cet effet une perforation supplémentaire pour le passage du fluide sous pression qui, agissant sur chacun des échantillons fluides à filtrer stockés dans les puits du bac, sont refoulés en parallèle vers le(s) filtres(s) et donc vers ladite deuxième pluralité de tuyaux.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :
La figure 1 est une vue en élévation du dispositif selon l'invention ;
la figure 2 est une vue en élévation, avec coupe partielle, montrant certains détails du dispositif illustré à la figure 1 ;
la figure 3 est une figure de dessus du joint perforé utilisé dans le dispositif des figures 1 et 2 ;
la figure 4 montre une vue de détail en coupe d'une plaque de fermeture du bloc inférieur illustré à la figure 2 ;
la figure 5 est une vue de dessus d'un badge porte-filtre utilisé dans le cadre de la présente invention ;
la figure 6 est une vue de dessous du badge de la figure 5 ;
la figure 7 est une vue en élévation frontale montrant un détail constructif d'un rail de guidage et de support illustré à la figure 2 et permettant l'introduction du badge précité ;
la figure 8 est une vue en élévation, avec arrachements, illustrant une armoire à électro-vannes coopérant avec le dispositif de filtration selon l'invention;

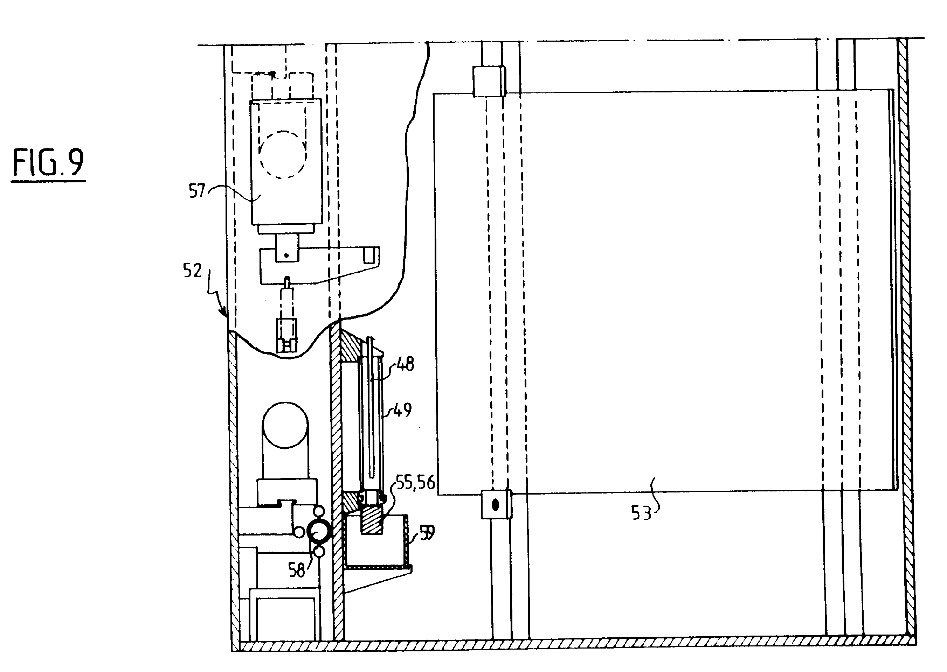

la figure 9 illustre une vue de profil et en élévation latérale d'une armoire de mesure de niveaux coopérant elle aussi avec le dispositif de filtration.

L'utilisation du dispositif de filtration conforme à l'invention, qui est illustré aux figures précitées et qui va être décrit ci-après, requiert la préparation préalable des échantillons à filtrer. Cette préparation comporte trois étapes : distribution des échantillons, ajout de réactifs et de diluant et incubation.

En fait, les échantillons arrivent rarement dans un laboratoire dans des volumes identiques et même si c'était le cas, ces volumes sont normalement trop importants pour l'utilisation dans le dispositif selon l'invention, il faut donc, dans un premier temps, prélever un volume constant et homogène (environ 1 ml) de chaque échantillon à filtrer et le redistribuer dans un bac de stockage, qui sera décrit par la suite.

Le passage ultérieur de réactif s'impose pour pouvoir soumettre les échantillons à l'opération d'observation et de comptage bactériens ; évidemment, la variété des réactifs et leur quantité est adaptée à la nature des échantillons.

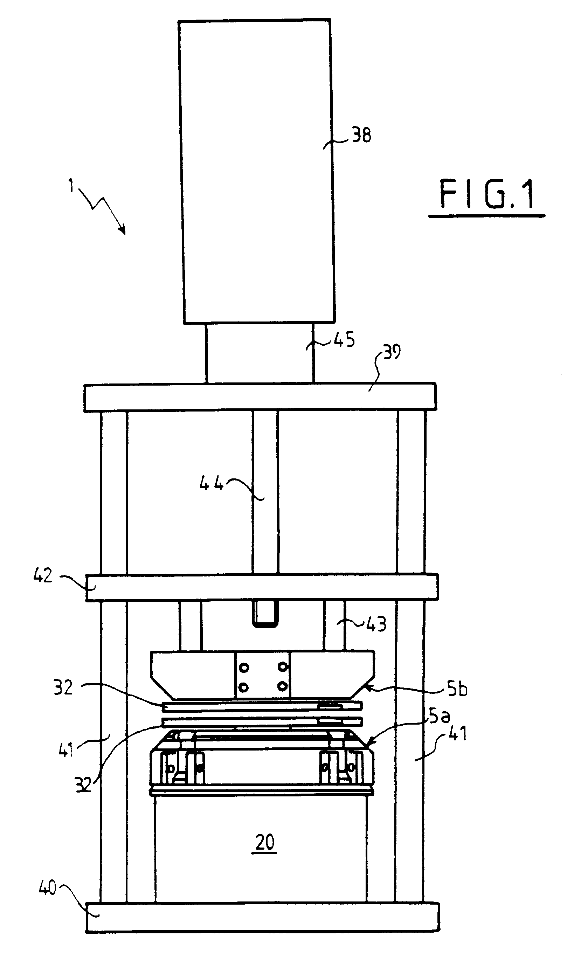

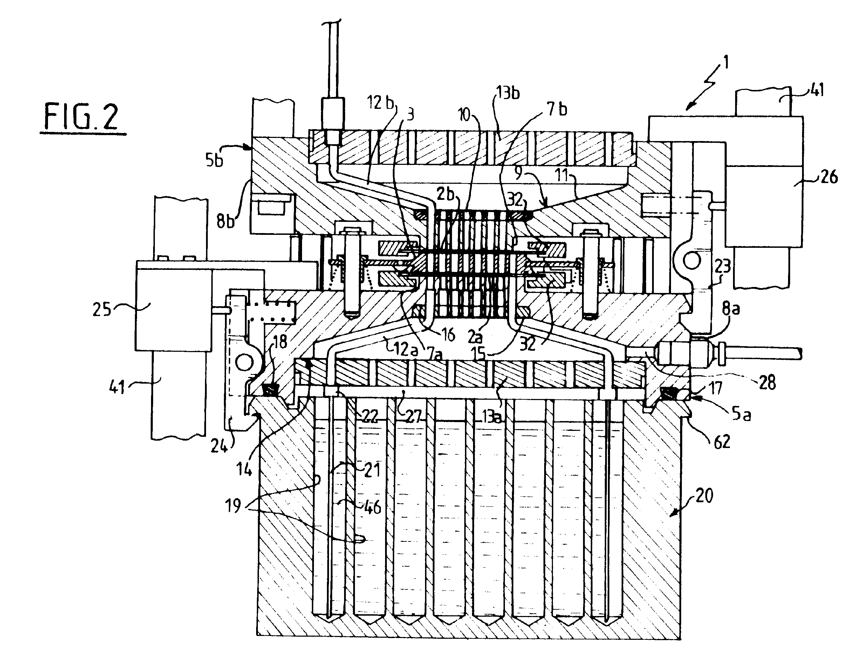

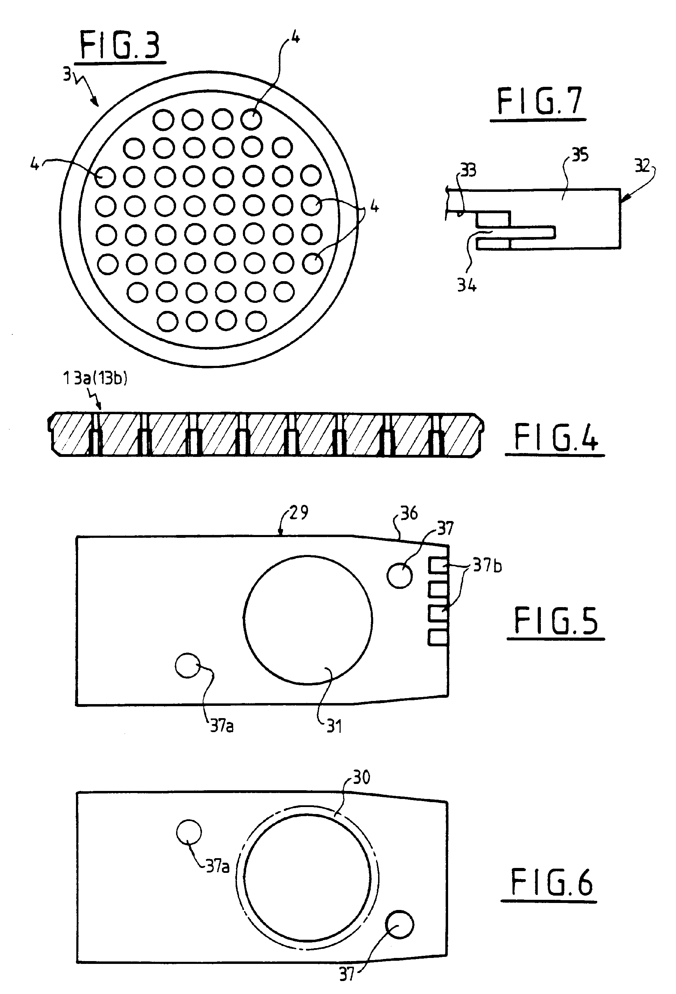

Le dispositif de filtration 1, selon l'invention, illustré aux figures 1 et 2, comporte deux filtres 2a, 2b, entre lesquels est disposé un joint 3 (cf aussi la la figure 3) qui comporte une pluralité de perforations 4 ménagées sur toute son épaisseur (hauteur). Les filtres s'appliquent de façon étanche contre le joint 3 sous l'action de deux blocs de serrage 5a et 5b, de manière que le joint perforé délimite sur chaque filtre une pluralité de zones de filtration indépendantes et étanches correspondant aux perforations du joint.

Le filtre 2b présente une porosité moindre que le filtre 2a.

Chacun des deux blocs de serrage 5a et 5b comporte un disque perforé, 7a et 7b respectivement, pourvu d'un nombre de perforations alignées avec les perforations du joint 3. Chaque disque 7a, 7b fait saillie à partir d'une enveloppe sensiblement cylindrique, 8a et 8b respectivement, délimitant une surface interne tronconique 9, dont la petite base 10 correspond à un disque 7a, 7b tandis que la portion inclinée 11 correspond à une zone parallèlement à laquelle sont acheminées les portions intermédiaires d'une pluralité de tuyaux, tels que les tuyaux 12a et 12b de la figure 2. Les tuyaux 12a convergent vers le disque 7a du bloc 5a, à partir d'une plaque perforée 13a d'obturation étanche du bloc 5a. Cette plaque prend appui sur le siège 14 ménage à l'intérieur de chaque enveloppe 8a, 8b.

En ce qui concerne les tuyaux 12b, ceux-ci divergent du disque 7b du bloc 5b vers une plaque perforée 13b, identique à la plaque 13a, qui obture de façon étanche le bloc 5b (cf aussi la figure 4).

Le raccordement des tuyaux 12a et 12b aux disques 7a, 7b et aux plaques 13a, 13b, respectivement, se fait à l'aide de raccords rapides.

Ces tuyaux sont maintenus en position à l'aide d'une plaquette 15 en résine polymérisee, dans laquelle ils sont emprisonnés et qui s'applique de façon étanche sur un deuxième siège 16 de chaque bloc de serrage, ce siège correspondant à la face interne des disques de serrage 7a, 7b.

Les extrémités des tuyaux 12a, 12b sont fixées de façon étanche dans les disques et les plaques d'obturation amovibles correspondants.

Le bloc de serrage 5a est appliqué de façon étanche (l'étanchéité est assurée par un joint torique 17 fixé dans une rainure 18 ménagée dans l'enveloppe du bloc 5a) sur un bac 20 comportant une pluralité de puits de stockage indépendants 19 destinés à contenir les échantillons à filtrer 46.

Dans ces puits sont immergés des tubes 21, en acier inoxydable, de prélèvement des échantillons, qui sont reliés aux extrémités inférieures des tuyaux 12a par des raccords rapides, tels que ceux indiqués par la référence 22.

Les extrémités inférieures des tubes 21 sont biseautées afin de mieux prélever les échantillons au niveau du fond des puits de stockage sans risquer de se boucher. Leur diamètre extérieur est de 2 mm, alors que le diamètre intérieur est de 0,8 mm.

Deux griffes de verrouillage 23, sont prévues pour serrer les blocs entre eux, tandis que quatre griffes de verrouillage 24 permettent de serrer le bloc 5a de façon étanche contre le bac 20.

Des électro-aimants 25 et 26, équipent ces griffes de verrouillage et permettent leur commande d'ouverture.

Le serrage entre le bloc 5a et le bac 20 permet de créer une chambre étanche 27 délimitée entre la plaque perforée amovible 13a, l'enveloppe 8a du bloc 5a et les puits de stockage 19.

Il est donc possible d'injecter dans la chambre 27 de l'air sous pression par un orifice 28 ménagé dans l'enveloppe 8a du bloc 5a: à cet effet, la plaque perforée amovible 13a comporte une perforation supplémentaire pour le passage de l'air sous pression dans la chambre 27. Il est facile de comprendre que la chambre 27 se comporte, dans ces conditions, comme un système de cloche à pression qui, sous l'action de la pression de l'air exercée sur les échantillons à filtrer, stockés dans les puits du bac, permet leur renfoulement, en parallèle, vers les filtres 2a et 2b, à travers les tubes de prélèvement 21, les tuyaux 12a et le joint d'étanchéité 3.

Le filtrat passe ensuite dans les tuyaux 12b.

Il est donc clair que dans le dispositif illustré aux figures 1 et 2 la filtration des échantillons a lieu en sens inversé (du bas vers le haut) par rapport au sens classique (du haut vers le bas).

Pour permettre de manipuler, sans risque de les abîmer, tout en permettant de les indexer, les filtres 2a, 2b, ceux-ci sont collés sous la face férieure d'un badge porte-filtre 29, illustré aux figures 5 et 6, sur une zone annulaire indiquée par la référence 30 délimitant une ouverture circulaire 31, dans laquelle pénétrent les disques 7a, 7b. Ce badge est dessiné de telle sorte qu'il ne puisse se placer à l'envers.

Chaque badge porte-filtre est destiné à être introduit dans un rail métallique 32 de guidage et de support (du badge) illustré aux figures 2 et 7. L'introduction de chaque badge dans le rail correspondant est facilitée par la présence d'un biseau 36.

On peut remarquer la grande ouverture centrale 33, correspondant à l'ouverture 31 du badge, ainsi que la présence d'encoches 34 ménagées dans deux épaulements latéraux 35 du rail 32. Chaque badge est, en fait, glissé dans les encoches 34. Pour permettre, l'introduction correcte du badge dans le rail on peut utiliser un systeme détrompeur (non représenté aux figures). Les rails 32 ainsi équipés sont enfilés dans les disques 7a, 7b des blocs 5a, 5b, lorsque ceux-ci sont écartés entre eux. De cette manière les filtres 2a, 2b peuvent être serrés entre chaque disque des blocs de serrage et le joint d'étanchéité 3.

Il est facile de vérifier que le dessin des rails est conçu pour qu'il n'y ait aucun risque d'accrochage avec une partie dure susceptible de perforer les filtres, qui sont fragiles.

Le badge 29 peut avantageusement coopérer avec un système détrompeur soit en ménageant sur le badge des perforations ou des encoches de détrompage 37b, destinées à coopérer avec des saillies de détrompage portées par le système détrompeur (non représenté) précité, disposé dans le rail, pour permettre l'introduction du badge dans ce dernier et connaître la nature du filtre, évitant ainsi des erreurs.

De façon simplifiée, l'indexation peut être obtenue en découpant ou en perforant la périphérie du filtre (la même forme existe alors en mâle sur un microscope d'analyse du filtre).

Il est possible de coder binairement plus de dix types de filtres à l'aide de découpes ménagées dans chaque filtre.

L'indexation en position du badge est réalisée à l'aide de plots de centrage (non représentés) qui sont portés par le rail 32 et qui viennent se placer dans deux trous de centrage correspondants, 37 et 37a du badge 29.

Le badge porte-filtre conforme à l'invention confère au dispositif de filtration les avantages suivants (en coopération avec d'autres éléments qui seront évoqués plus loin), qui sont définis par la possibilité de :
1) effectuer l'analyse des échantillons dans un autre poste de travail,
2) reprendre le filtre pour réexaminer les objets (bactéries, etc..), dont il est porteur, après coloration appropriée,
3) ajouter des produits spéciaux sur le filtre pour obtenir une réaction spécifique d'affinité entre le filtre et les objets qu'il porte,
4) recueillir individuellement, les objets précités soit à l'aide de micro-pipettes (d'un diamètre d'aspiration approximativement de l'ordre de 5 µm) ou de micro-adhésifs, etc...
5) transférer sur un adhésif transparent, à l'aide d'un "contre-badge" de support de cet adhésif, et ce par calquage par pression, les objets du filtre porté par le badge (à savoir, les informations utiles), tout en annulant les éventuelles déformations du filtre (à structure micro-perforée, donc très délicate) et en obtenant aussi un contraste extraordinaire, la fluorescence du fond défini par la surface d'observation du filtre étant parfois gênante.

De cette manière, les procédés classiques d'analyse d'échantillons notamment biologiques sont enrichis par les opérations évoquées sous 1) à 5).

L'utilisation de deux filtres permet d'appliquer le principe du double filtrage, à savoir d'arrêter par le premier filtre 2a, les particules les plus grosses, susceptibles de gêner l'analyse ultérieure sur le filtre plus fin 2b.

Il est aussi clair que le dispositif de filtration peut fonctionner avec un seul filtre ou, moyennant de légères modifications, avec 3, 4 ou 5 filtres et même plus.

Bien entendu, lorsqu'on veut effectuer un rinçage des canalisations et du joint, aucun filtre n'est nécessaire : dans ce cas, il est prévu d'introduire donc des badges sans filtre. La présence d'un filtre peut être validée par un micro-rupteur, chaque badge étant retenu dans le rail correspondant par un portillon (non représentés); c'est l'action conjuguée du micro-rupteur et du portillon qui commande le fonctionnement du dispositif de filtration, un voyant lumineux s'allumant lorsque les blocages de serrage du dispositif sont autorisés à être fermés.

En ce qui concerne le joint d'étanchéité, celui-ci est réalisé en élastomère de silicone et est calculé pour s'écraser légèrement tout en se dilatant radialement de manière à contribuer au renforcement de la tension des filtres.

Dans certaines conditions une plaque microperforée (de type connu des techniciens en la matière) vient se placer en aval entre le filtre et les disques des blocs de serrage.

Les perforations du joint (au nombre de 50 dans l'exemple 35 illustré) sont en parfait alignement avec les perforations des disques de serrage 7a, 7b des blocs 5a, 5b.

Le joint 3 est en liaison souple avec ces blocs.

L'écartement entre le joint et les blocs est obtenu à l'aide de ressorts (non représentés) qui permettent de définir deux fentes d'accès par lesquelles sont introduits les badges porte-filtre montés dans les rails correspondants (cf fig. 1).

Le serrage des filtres entre le joint en élastomère de silicone 3 et les disques 7a, 7b des blocs 5a, 5b, se fait à l'aide d'un vérin pneumatique 38 supporté par une plaque supérieure 39 par l'intermédiaire d'une entretoise 45 fixée à cette plaque, qui est reliée à un socle 40 par des colonnes de guidage 41 en acier permettant le coulissement des pièces mobiles avec une grande précision. Le long de ces colonnes coulisse une plaque 42 qui est reliée à la tige 44 du vérin 38. C'est cette tige qui provoque la descente de la plaque coulissante 42, qui vient en appui sur des piliers 43 solidaires du bloc de serrage supérieur 5b, faisant ainsi descendre ce dernier (cf la figure 1).

Etant donné que le bloc 5b est solidarisé avec le bloc inférieur 5a, lors de la de2scente du vérin 38, le bloc inférieur 5a est mis en contact avec le bac 20, réalisant ainsi l'étanchéité globale du système, premièrement, entre le bac et le bloc inférieur grâce à la présence du joint torique 17 et, deuxièmement, entre les blocs de serrage et les filtres, d'une part, et les filtres et le joint, d'autre part. Il est facile de comprendre que le caractère global du serrage des filtres assure avec un mouvement le serrage de ce dernier et l'étanchéité de mise en pression du bac. Il est facile de comprendre que la qualité de surface des disques de serrage des blocs 5a, 5b est essentielle pour l'étanchéité.

Comme le montre la figure 1, le bac est placé sur le socle 40, entre les colonnes de guidage 41, qui forment une sorte de cage.

En ce qui concerne le vérin 38, celui-ci est un vérin pneumatique fonctionnant avec une pression de 5 à 7 bars, à l'air lubrifié. Il est du type commandé par une vanne à trois positions, ce qui permet de le placer en position haute, basse ou intermédiaire.

Ce vérin permet d'appliquer une force d'environ 200 kg, ce qui assure la descente de l'ensemble des deux blocs de serrage 5a, 5b et l'encliquetage du bloc inférieur 5a sur le bac 20.

Bien entendu, le vérin d'actionnement peut être disposé au-dessous du bac 20, sans que pour autant le fonctionnement du dispositif soit altéré.

C'est l'enveloppe des blocs de serrage, réalisée en acier inoxydable ou en matériau plus léger, tel que duralumin, qui encaisse les efforts de compression créés par le vérin ou ceux encore plus grands réalisés lors de la mise en pression de la chambre précitée (en ce qui concerne les deux blocs de serrage, ils sont sensiblement identiques entre eux, mise à part la présence de l'arrivée 28 d'entrée d'air sous pression pour le seul bloc inférieur).

La mise en pression de la chambre 27, qui est évidemment précédée par la descente du vérin 38, a lieu à l'aide d'air comprimé envoyé à une pression réglable de 1 à 7 bars (sans pour autant exclure l'utilisation d'une pression plus élevée) par l'orifice 28.

Le volume réduit du bac 20 et l'emploi de matériaux non cassants, conjointement à l'emploi d'un joint d'étanchéité torique, éliminent les risques liés à la pression bien que, en cas de besoin, il serait facile d'entourer la cage (constituée par les colonnes de guidage 41) par un caisson métallique de protection.

Sous l'action de la pression, les échantillons 46, contenus dans des puits de stockage 19 du bac 20, sont chassés en parallèle, à savoir de façon indépendante, dans les 50 tubes de prélèvement 21 (ceci impose, évidemment, que les canalisations disposées en aval soient ouvertes).

Les échantillons passent ensuite au travers de zones de filtration indépendantes délimitées, sur chaque filtre, par le joint 3 et les disques de serrage 7a, 7b.

L'étanchéité est telle qu'il ne peut y avoir d'échange et de pollution d'une zone de filtration aux zones voisines définies sur un même filtre.

Les échantillons ainsi filtrés s'évacuent par les canalisations reliées aux tuyaux 12b du bloc supérieur.

En ce qui concerne l'actionnement des électroaimants de commande de l'ouverture des griffes de verrouillage précitées, il y a lieu de noter qu'il doit être effectué après la remise en pression du vérin et la vidange de l'air de mise sous pression du bac.

Bien entendu, des dispositifs de sécurité, connus des techniciens en la matière, sont à prévoir pour vérifier les mauvais fonctionnements des électro-aimants et des griffes de verrouillage, afin d'éviter que le bac soit entraîné intempestivement vers le haut par la remontée du vérin.

En ce qui concerne la destination immédiate du filtrat, qui sot des filtres 2a, 2b et qui parcourt les tuyaux 12b sortant du bloc supérieur de serrage 5b, celle-ci se réduit à une simple évacuation.

Toutefois, dans le cadre de la présente invention, il est prévu d'effectuer un contrôle de la tendance au colmatage de chaque zone de filtration des filtres (ainsi que des canalisations) par les particules contenues dans les échantillons, au cours du filtrage. La méthode employée est basée sur la détection d'une diminution du débit de filtration.

Ce contrôle s'impose parce qu'un filtre colmaté ne se prêterait pas aux opérations de traitement préalable pour l'observation et le comptage bactériens suivant la filtration.

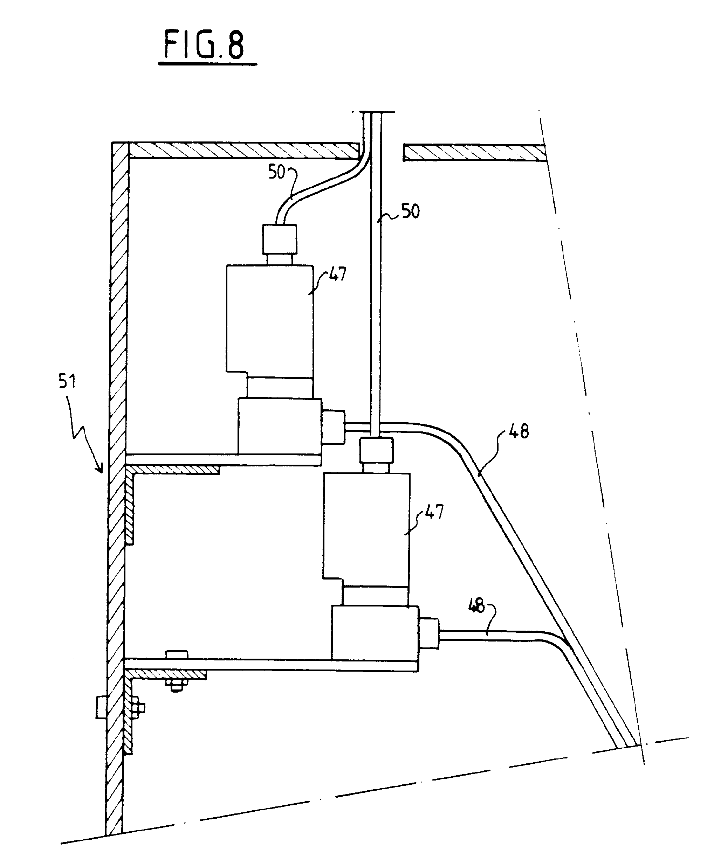

A cet effet, les 50 canalisations (cf.référence 50 de la figure 8) sortant du bloc de serrage supérieur 5b débouchent chacune sur des électro-vannes 47 du type à trois voies, connu en soi. En position normale, ces électrovannes sont fermées. Il est possible de commander leur ouverture et de diriger le flux des échantillons en cours de filtrage, soit vers une voie commune d'évacuation, soit vers 50 tubes calibrés borgnes en verre 49, dans lesquels les échantillons s'accumulent après avoir traversé les filtres. La liaison entre chaque tube calibré et l'électrovanne correspondante se fait par l'intermédiaire de canalisations 48.

L'utilisation des tubes calibrés permet d'utiliser le dispositif de contrôle de la tendance au colmatage pour effectuer aussi une mesure du volume filtré pour chaque échantillon.

La voie d'évacuation peut être mise en dépression pour continuer à aspirer les échantillons même en l'absence de pression en amont de la chambre 27 préci-tée : une telle dépression est efficace pour éliminer les phénomènes de gouttes pendantes.

Les canalisations 50 et 48 sont identiques entre elles et sont constituées par des tubes souples en TYGON, dont le diamètre extérieur est de 2 mm et le diamètre intérieur de 0,8 mm.

Les cinquante électrovannes 47 sont disposées dans une armoire 51 (réalisée en tôle) comme illustré à la figure 8. De même, les cinquante tubes calibrés 49 sont disposés sur deux niveaux, de vingt cinq tubes chacun, dans une autre armoire en tôle 52.

Le contrôle permanent des niveaux des échantillons filtrés, s'écoulant au fur et à mesure du filtrage, est effectué à l'aide d'une caméra de prises de vues (non représentée) qui surveille les cinquante niveaux. Après numérisation, les images des niveaux sont contrôlées périodiquement et leurs progressions sont comparées par rapport à une loi de colmatage de référence, et ce à l'aide d'un ensemble électronique-informatique (non représenté) chargé d'un logiciel approprié d'analyse d'images.

Le niveau en partie haute de chaque tube calibré transparent 49 est atteint en quelques minutes. L'évolution dans le temps de chaque niveau est définie par la position du ménisque de niveau, qui apparaît comme un trait sombre pour la caméra de surveillance des niveaux, qui regarde la totalité des tubes calibrés transparents.

Afin de réduire l'encombrement, un miroir 53 est placé à 45° entre l'armoire et la caméra, de façon à renvoyer l'image des tubes calibrés en verre 49 vers cette dernière. Des tubes fluorescents éclairent des tubes calibrés 49 par l'arrière. Le fond de ces tubes calibrés est obturé par des bouchons étanches 55 portés chacun par une came 56, dont la position dépend d'un électro-aimant 57.

Le fond des tubes calibrés 49 est obturé lorsque les cames 56 sont relevées par l'action d'un arbre à came 58. Si la quantité d'échantillons à filtrer est plus importante que la contenance de chaque tube calibré, par exemple égale à 5 ml, ces tubes sont ouvert par l'intermédiaire de l'électro-aimant 57 précipité, qui ouvre le fond des tubes 49 : dans ce cas, les échantillons filtrés s'écoulent dans un bac de recueil 59 placé sous chaque série de vingt cinq tubes calibrés et sont évacués dans un récipient de rejet (non représenté).

Lorsque le système détecte une tendance au colmatage sur un tube, l'électrovanne du tube correspondant est fermée et le liquide contenu dans le puits ne passe plus, ce qui n'empêche pas la filtration de se poursuivre dans les autres tubes, qui à leur tour seront fermés, si besoin est.

Dans le cas de liquides qui ne provoquent pas le colmatage des filtres ou pour lesquels il n'est pas nécessaire de pousser la filtration très loin (car il existe une densité de particules ou de cellules élevée), le suivi de la filtration n'est pas utile. Il suffit alors d'appliquer la pression pendant un temps déterminé, de telle sorte qu'aucun puits n'arrive à être vidé complètement. En effet, si tel était le cas, il se produirait une chute de pression sensible et la filtration serait ralentie.

Pour passer les échantillons suivants, sans rompre l'étanchéité de la filtration, la procédure est la suivante :
1) on fait tomber la pression dans le bac (par ouverture d' une vanne),
2) on descend le vérin 38,
3) on ouvre les griffes 23,
4) on remonte le vérin 38,
5) on place le bac suivant, par exemple un bac de rinçage, à la place du bac de stockage d'échantillons,
6) on redescend le vérin et on remet en pression.

Dans cette séquence, les filtres sont toujours restés en étanchéité. En principe, aucun liquide ne s'écoulera, ni à partir des tubes de prélèvement (reflux), ni en aval, puisque toutes les électrovannes sont fermées depuis la dernière mise en pression.

Après leur ouverture globale, le(s) liquide(s) nouveau(x) viendra(ont) progressivement remplacer les échantillons liquides qui étaient restés dans les tubulures. A priori, si les fermetures des électrovannes avaient été déclenchées par les mêmes paramètres de niveau et/ou de colmatage, le passage des liquides suivants devra se faire de façon identique, selon les tubes.

En fin d'opération, un séchage peut être utile afin de "fixer" les particules sur leur filtre, mais aussi d'éviter des écoulements latéraux qui contamineraient les zones de filtration existant sur un même filtre.

En effet, les essais montrent que, pou: des cellules ou des bactéries, après un passage en pression, l'attachement des particules sur le filtre est suffisamment fort pour que le risque soit nul. Pour d'autres particules, le risque peut exister : deux solutions existent dans le système :
1) les électrovannes fermées empêchent le reflux pour les tubes en aval du dernier filtre
2) la filtration en sens inversé (du bas vers le haut) par rapport au sens classique (du haut vers le bas) fait que les liquides présents dans les tubes en amont des filtres s'écoulent dans le bac.

Le séchage élimine tout risque. Il faut alors, comme lors de la séquence précédente, placer un bac vide et laisser passer l'air pour purger les canalisations.

Après la descente du vérin, toutes les griffes 23 et 24 seront dégagées et, lors de la remontée du vérin, les fentes d'accès au joint 3 seront ouvertes et les badges pourront être retirés.

En ce qui concerne le décolmatage du filtre, celui-ci peut être avantageusement effectué par inversion alternée de l'écoulement des échantillons en cours de filtration. A cet effet, on peut, sous contrôle d'un ordinateur de pilotage, commander la fermeture de la vanne (ou des vannes) concernée(ées), dès que le colmatage a été détecté, tout en commandant également la mise à l'air libre du bac des puits de stockage des échantillons, ce qui entraîne une inversion du flux de ces derniers.

Quelques dizaines de cycles d'inversion de l'échantillon (qui est répétée un certain nombre de fois pendant un temps relativement court, par exemple une minute environ) sont suffisantes normalement pour décolmater la zone ou les zones de filtration, indépendantes et étanches, qui est (ou qui sont) colmatée(ées).

Toutefois, en procédant de cette manière (à savoir , en mettant en oeuvre une sorte de fonctionnement en "push-pull"), il faut prendre des mesures appropriées pour que la (les) quantité(s) d'échantillon(s) soi(en)t le plus petite(s) possible, juste suffisante(s) pour un décolmatage efficace : à cet effet, il convient d'utiliser des capillaires (constituant les tubes de prélèvement et les tuyaux amont et aval évoqués plus haut) pas trop souples.

Le dispositif de filtration selon l'invention coopère non seulement avec un bac de stockage, tel que le bac 20 décrit plus haut comprenant cinquante puits de stockage pour n échantillon à filtrer (n étant variable de 1 à 50 dans l'exemple illustré), mais aussi avec d'autres types de bacs, dont certains à circulation, avec chauffage, etc....., tandis que d'autres bacs sont essentiellement des bacs permettant le rinçage du dispositif de filtration, qui est effectué par du TRITON dans le cas d'échantillons de lait, mais qui peuvent contenir du colorant.

Chaque type de bac est réalisé en duralumin ou en inox et présente une épaisseur de paroi appropriée, par exemple de 14 mm, pour résister à la pression. C'est l'existence d'un rebord 62 qui permet l'accrochage des griffes 24 du bloc de serrage inférieur 5a.

Un pan (non représenté) peut être à la base de chaque bac et permet de l'équiper d'un système détrompeur afin qu'il soit toujours positionné de la même façon. A cet effet, du bac pénètre dans un collier (non représenté) placé sur le socle du dispositif de filtration.

Un indexage supplémentaire peut être réalisé par un codage d'ergots (non représentés) interdisant de placer un bac dans un collier destiné à un autre bac. Par ce moyen, on dispose de bacs bien identifiables et qui sont donc susceptibles d'être placés sur le socle du dispositif de filtration dans l'ordre légitime des opérations correspondant à un protocole donné. En disposant les ergots précités de façon oblique, on peut aussi les utiliser pour la reconnaissance automatique (à savoir, présence, absence et type) à l'aide de microcontacts.

L'ensemble électronique informatique précité est organisé, par exemple, autour d'un système informatique, (notamment du type PC industriel), comme déjà évoqué plus haut.

La carte d'imagerie permettant le contrôle permanent des niveaux dans des tubes calibrés, contenus dans l'armoire de mesure des niveaux 52, est chargée dans cet ordinateur qui pilote aussi un automate programmable, assurant l'exécution des différentes opérations nécessaires pour le fonctionnement du dispositif de filtration selon l'invention ; il s'agit, par exemple, de la descente du vérin et de l'ouverture des électrovannes, du changement d'état des électro-aimants, de la prise en compte des signaux des systèmes de sécurité contrôlant la position des badges porte-filtre des bacs, etc...., ainsi que de l'activation des commandes électriques en basse tension, etc....

La carte d'imagerie intégrée à l'ordinateur est reliée à la caméra TV de l'armoire de mesure de niveaux et permet donc la numérisation permanente de l'image des cinquante niveaux dans les tubes calibrés transparents qui y sont contenus et l'envoi des résultats, tube par tube, à l'ordinateur. De façon plus précise, la carte d'imagerie détecte une baisse de débit et commande la fermeture des électrovannes disposées sur les canalisations correspondantes.

L'ordinateur a donc trois fonctions principales:
- gestion du dispositif de filtration dans son ensemble et en particulier,du système d'imagerie et des automatismes.
- interface avec l'utilisateur,
- traitement des résultats (qui sont communiqués à une imprimante).

Le nombre de bactéries par ml peut être détermine par l'ordinateur en fonction :
. du volume d'échantillon prélevé,
. des proportions des différents additifs utilises lors de la préparation préalable de chaque échantillon,
. du volume d'échantillon filtré,
. du nombre de bactéries trouvées lors de l'observation et le comptage bactériens d'un filtre chargé en bactéries à l'aide du dispositif de filtration selon l'invention.

En ce qui concerne le dispositif d'observation et de comptage, celui-ci comporte des objectifs et peut utiliser une platine, telle que celle qui fait l'objet d'une Demande de Brevet co-pendante déposée conjointement par la Demanderesse.

Au demeurant, on peut imaginer une autre structure pour les blocs de serrage desquels font partie intégrante les disques perforés 7a, 7b, de serrage étanche des filtres 2a 2b en coopération avec le joint perforé 3.

En outre, il est possible de prévoir un dispositif de chauffage des blocs de serrage permettant de garder les filtres à une température de l'ordre de 40°C, ce qui améliore la filtration des échantillons légèrement visqueux.

Les puits de stockage des échantillons peuvent également être éventuellement préchauffés au bain-marie avec leurs bacs.

De plus, il y a lieu de souligner qu'il faut prévoir une pluralité de bacs permettant la coloration des filtres, après la filtration, ainsi que les différentes étapes de rinçage et de désinfection (une désinfection s'impose en fait pour éviter la contamination due au passage des tubes - ou aiguilles - de prélèvement d'un bac à un autre, en sorte qu'il est bien que le rinçage soit effectué avec un liquide désinfectant).

Il est en outre possible de prévoir l'introduction automatique de ces bacs, ainsi que des bacs précédemment décrits, sous les blocs de serrage permettant la filtration des échantillons, et ce afin de diminuer le temps requis par l'exécution des opérations manuelles.

En ce qui concerne le chauffage des blocs de filtration avant que la filtration ait lieu, celui-ci peut être réalisé de deux façons :
- par passage de TRITON, éventuellement dilué, chauffé à 50°C, juste avant la filtration, comme préconisé par la méthode DEFT, ou
- par chauffage direct de la zone du dispositif contenant les filtres, sous contrôle d'un thermostat.

Il y a en outre lieu d'attirer l'attention sur le soin qu'il faut apporter quant à la géométrie des parties actives du dispositif de filtration pour que soient réduits les volumes morts, qu'il convient de maintenir très faibles pour des raisons de colmatage et de précisions de mesure.

En fait, le volume en amont des filtres risque de créer un colmatage définitif de ceux-ci, lorsque les échantillons à filtrer sont très chargés de particules, et le volume en aval ne permet pas de détection de la tendance au colmatage lorsque les quantités de liquide filtré sont très faibles (ce qui correspond également au cas d'échantillons très chargés).

La dynamique de mesure nécessaire peu: être préservée en rendant vraiment efficace la détermination d'une éventuelle tendance au colmatage des filtres dès le passage d'un volume d'échantillons correspondant à 0,4 - 0,5 ml. Un volume mort aval peut donc être assez inférieur à 0,4 ml.

La précision des résultats de l'analyse impose une détection précise des volumes effectivement filtrés et un étalonnage également précis des volumes morts s'additionnant à la fin de la manipulation.

Bien entendu, il y a lieu d'attirer une fois de plus l'attention sur les problèmes d'indexage dont la résolution, telle qu'elle est indiquée à titre d'exemple plus haut, est nécessaire pour effectuer un repérage constant des échantillons. De façon plus précise, l'indexage consiste à repérer l'orientation des filtres par rapport au dispositif de filtration. En outre, il doit être clair que, bien que dans le dispositif de filtration décrit plus haut, -où le bloc amont 5a est inférieur tandis que le bloc aval 5b est supérieur-, le sens de filtration est inversé (du bas vers le haut) par rapport au sens classique (du haut vers le bas), il est possible d'imaginer aisément un dispositif dans lequel le sens de filtration soit le sens habituel.

Dans un dispositif modifié de ce genre on retrouvera au moins un joint perforé et, par exemple, deux filtres de porosités différentes ainsi que les deux disques perforés de serrage précités, disposés les uns par rapport aux autres comme déjà précité pour le dispositif des figures 1 et 2.

Ces disques de serrage pourront être intégrés dans deux blocs, dont le bloc amont sera disposé à la partie supérieure alors que le bloc aval sera disposé à la partie inférieure, en sorte que le sens de filtration soit le sens classique évoqué plus haut.

Quant à la configuration des blocs de serrage, celle-ci peut être à priori quelconque, pourvu qu'il y ait la possibilité d'accès pour les arrivées et les sorties des échantillons à filtrer.

En particulier, ces blocs pourront être constitués par des plaques, par exemple solidarisées avec une structure cylindrique (enceinte) de façon fixe, en ce qui concerne la plaque supérieure, et de façon coulissante en ce qui concerne la plaque inférieure.

Ceci permettrait, d'une part, d'écarter les disques perforés de serrage pour l'introduction de nouveaux filtres et, d'autre part, de rapprocher ces disques entre lesquels on a préalablement placé le joint perforé et les deux filtres) sous l'action d'un dispositif d'actionnement du serrage, tel qu'un vérin (ou un levier) disposé à la partie inférieure du dispositif de filtration (le serrage des disques pourrait se faire, pour des raisons de sécurité, contre l'action de ressorts disposés entre les deux plaques précitées).

Bien entendu, entre le disque perforé de serrage inférieur et le vérin il faudrait interposer une cuvette d'aspiration (vers le bas) des échantillons à filtrer, selon une technique connue des techniciens en la matière, cette aspiration s'imposant parce que la seule action de la gravité serait insuffisante pour assurer la filtration (Bien entendu, il serait avantageux d'associer à l'aspiration aussi l'action de la mise sous pression).

Dans cette variante simplifiée, les puits de stockage et le bac seraient remplacés par une pluralité d'entonnoirs (cônes) doseurs disposés chacun aux extrémités amont (donc supérieures, qui pourraient être raccordées, par exemple, à une plaque perforée du type correspondant aux plaques 13a, 13b de la figure 2) d'une pluralité de tuyaux amenant les échantillons à filtrer vers les perforations correspondantes du disque supérieur, ainsi que vers le(s) filtre(s), le joint perforé et le disque inférieur. L'enceinte de fixation des plaques de serrage et de la plaque de raccordement précitées pourrait aussi être équipée d'un couvercle de fermeture étanche définissant une chambre étanche en coopération avec l'enceinte et la plaque de raccordement des tuyaux amont, dans laquelle on pourrait créer une pression supplémentaire, agissant du haut vers le bas sur les échantillons à filtrer contenus dans les entonnoirs, de manière à accélérer la filtration. Ce fonctionnement serait à basse pression et resterait différencié par rapport au fonctionnement du dispositif représenté aux figures 1 et 2, qui se prête à l'emploi de hautes pressions dans la chambre 27.

Dans le cadre de la présente invention il a été donc défini un procédé de filtration utilisant le dispositif selon les dispositions qui précédent, qui comporte les opérations suivantes :
i) une opération de contrôle de la tendance au colmatage de chacune desdites zones de filtration, évoquées plus haut, par les particules contenues dans les échantillons, en cours de filtration, et
ii) une opération de mesure du volume filtré pour chaque échantillon.

De façon plus précise, l'opération i) consiste à détecter une éventuelle diminution du débit des filtrations pour chaque échantillon, et ce en faisant écouler les filtrats correspondants dans des tubes transparents et en surveillant l'évolution dans le temps de chaque ménisque des niveaux de chacun des tubes transparents, à l'aide dudit dispositif de prises de vue relié au dispositif de numérisation d'image, l'évolution précitée étant comparée avec la loi de colmatage de référence, à l'aide dudit logiciel d'analyse chargé dans ledit ordinateur de pilotage.

En ce qui concerne l'opération ii), celle-ci consiste essentiellement à rendre calibrés lesdits tubes transparents, qui sont obturés par des bouchons amovibles dont l'ouverture est commandée en cas de besoin, notamment en cas d'évacuation des échantillons filtrés.

Dans le cadre de ce procédé le sens de filtration peut être classique (à savoir du haut vers le bas) ou inversé (à savoir du bas vers le haut) par rapport au sens habituel; en outre, la filtration peut avoir lieu sous haute pression ou sous basse pression.

Il y a aussi lieu de remarquer que, bien que dans la description ayant trait aux figures on ait fait référence à un joint perforé 3 (délimitant sur un filtre une pluralité de zones de filtration indépendantes et étanches correspondant à ses perforations) et qui est interposé (à savoir, indépendant ou séparé) entre deux moyens de serrage (notamment constitués par deux disques métalliques perforés faisant partie intégrante de deux blocs creux, dont le forme - sensiblement tronconique - permet de réduire la surface de serrage du joint, et donc du filtre de support des échantillons, à des dimensions relativement faibles compatibles avec une exploration microscopique rapide), on peut également utiliser un joint perforé qui soit intégré à un des deux disques de serrage, par exemple le disque inférieur, et ce lorsque on n'utilise qu'un seul filtre. A cet effet, le joint peut comporter avantageusement deux pluralités de nervures (non représentées) faisant saillie d'une des faces principales du joint, à savoir de la face qui regarde vers le disque de serrage, dont la première pluralité comprend des nervures annulaires d'étanchéité destinées à s'appliquer chacune autour d'une des perforations du disque de serrage correspondant, alors que la deuxième pluralité comprend des nervures d'assemblage ménagées entre les nervures annulaires d'étanchéité, définissant une sorte de quadrillage, et destinées à s'emboîter dans des rainures complémentaires du disque.

Si le joint est interposé entre les deux disques de serrage, il peut être avantageusement équipé de moyens d'indexage, par exemple les mêmes moyens évoqués plus haut pour le badge.

Dans chaque cas, il est avantageux d'équiper le disque de serrage dans lequel n'est pas intégré le joint, ou les deux disques de serrage entre lesquels est interposé le joint, d'une grille métallique, elle aussi intégrée dans ces disques de façon appropriée : cette disposition (non représentée) est destinée à assurer, lors du serrage, une surface de référence très plane sur le filtre, ce qui est avantageux pour l'observation microscopique de celui-ci, qui exige que soit satisfaite la condition d'un parallélisme pratiquement parfait entre le plan d'observation et le plan de déplacement sous le microscope.

En outre, dans certaines applications, il peut être utile de réaliser une version simplifiée (non représentée) du dispositif selon l'invention, dans laquelle:
- les puits sont remplacés par des cônes jetables classiques (ayant notoirement une structure tubulaire avec section très réduite à l'extrémité inférieure), qui peuvent avantageusement contenir des billes flottantes constituant chacune une sorte de clapet automatique et qui sont disposés dans des alvéoles de support ménagées dans un premier bloc supérieur de serrage du filtre, lesdits cônes communiquant avec des tubes capillaires convergeant vers le disque perforé de serrage correspondant destiné à coopérer avec un disque de serrage (inférieur) d'un bloc inférieur qui est décrit ci-après,
- le vérin est remplacé par un levier d'actionnement visant à porter le disque de serrage d'un deuxième bloc de serrage inférieur, simplifié, communiquant avec une tête ou cuvette d'aspiration (par création d'une dépression) dans laquelle se recueillent les filtrats (la filtration a lieu dans le sens classique,à savoir du haut vers le bas), qui se mélangent donc après filtration,
- le dispositif porte-badge est (bien entendu) adapté à la version simplifiée des blocs de serrage,
- le bloc de serrage contenant les cônes jetables précités comporte un couvercle étanche dans lequel est ménagée une entrée destinée à être reliée à une source de fluide sous pression, ce qui offre -conjointement avec la cuvette d'aspiration précipitée- la possibilité d'effectuer la filtration par mise sous pression et/ou en dépression des échantillons à filtrer.

De façon alternative, on peut utiliser, dans la version simplifiée du dispositif conforme à l'invention, un bloc supérieur réalisé sous la forme d'un bloc entièrement jetable, intégrant à la fois des puits de stockage des échantillons ainsi que des tuyaux de raccord au disque perforé de serrage correspondant, destiné à coopérer avec le disque perforé de serrage inférieur (porté par le bloc inférieur susdit communiquant avec la cuvette d'aspiration dans laquelle se recueillent les filtrats).

## Revendications

1. Dispositif de filtration d'une pluralité d'échantillons fluides (46), liquides ou gazeux, contenant des particules à filtrer, telles que bactéries, cellules ou autres éléments, notamment contenues dans le lait ou le sang, comprenant :
- au moins un filtre (2a, 2b),
- des moyens de filtration simultanée et indépendantes, sur ce même filtre, desdits échantillons fluides,
- des moyens de filtration forcée des échantillons,
lequel dispositif de filtration est caractérisé en ce que lesdits moyens de la filtration simultanée et indépendante des échantillons fluides comprenant :
- au moins un joint (3) comportant une pluralité de perforations (4) ménagées sur toute son épaisseur,
- un premier (7a) et un deuxième (7b) moyens de serrage étanche de ce joint (3) et du filtre (2a), présentant des perforations destinées à être alignées avec les perforations (4) du joint (3) et à être mises, avec celles-ci, en communication, à une extrémité amont du joint et par interposition dudit filtre (2a), avec une pluralité d'arrivées indépendantes desdits échantillons fluides à filtrer et, à une extrémité aval dudit joint, avec une pluralité de sorties, également indépendantes, de ces échantillons fluides, lesdits .moyens de serrage perforés délimitant sur le filtre (2a), par l'intermédiaire du joint (3), une pluralité de zones de filtration indépendantes et étanches correspondant auxdites perforations, qui sont destinées à être traversées en parallèle par lesdits échantillons fluides sous l'action desdits moyens de filtration forcée, et
- des moyens d'indexage du (ou des) filtre(s).

2. Dispositif de filtration selon la revendication 1, caractérisé en ce qu'un deuxième filtre (2b) est interposé également entre les extrémités aval des perforations (4) du joint (3) et les sorties indépendantes correspondantes des échantillons, le deuxième filtre (2b) ayant une porosité moindre que le filtre (2a) disposé en amont, le joint perforé (3) délimitant également sur le deuxième filtre (2b) des zones de filtration indépendantes et étanches.

3. Dispositif de filtration selon l'une quelconque des revendications 1 ou 2, caractérisé en ce que le(s) filtre(s) (2a, 2b) avec le joint perforé (3) sont serrés entre un premier et un deuxième disque (7a, 7b) comportant chacun un nombre de perforations égal à celui du joint (3), à savoir égal au nombre desdites arrivées et sorties d'échantillons fluides, les perforations du premier disque de serrage (7a) recevant les extrémités aval d'une première pluralité de tuyaux (12a), dont les extrémités amont sont en communication avec des puits (19) de stockage des échantillons fluides à filtrer (46) menages dans un bac de stockage (20), tandis que les perforations du deuxième disque de serrage (7b) reçoivent les extrémités amont d'une deuxième pluralité de tuyaux (12b), les perforations (4) du joint (3) et lesdites zones de filtration correspondantes du(des) filtre(s) (2a, 2b) assurant la continuité entre lesdites première et deuxième pluralités de tuyaux (12a, 12b), dont la première (12a) est destinée à véhiculer vers le(s) filtre(s) (2a, 2b) les différents échantillons fluides avant filtration, - sous l'action desdits moyens de mise sous pression de ces échantillons fluides, contenus dans lesdits puits de stockage (19), vers les tuyaux (12a) correspondants de ladite première pluralité -, alors que la deuxième pluralité de tuyaux (12b) est destinée à véhiculer les échantillons fluides après filtration.

4. Dispositif de filtration selon la revendication 1, caractérisé en ce que, lorsqu'on n'utilise qu'un seul filtre (2a ou 2b), le joint perforé (3) est intégré à un des deux disques de serrage (7a ou 7b), et en ce que le joint (3) comporte deux pluralités de nervures faisant saillie d'une de ses faces principales, à savoir de la face qui regarde vers le disque de serrage, dont la première pluralité comprend des nervures annulaires d'étanchéité destinées à s'appliquer chacune autour d'une des perforations du disque de serrage correspondant, alors que la deuxième pluralité comprend des nervures d'assemblage ménagées entre les nervures annulaires d'étanchéité, définissant une sorte de quadrillage, et destinées à s'emboîter dans des rainures complémentaires du disque.

5. Dispositif de filtration selon l'une quelconque des revendications 2 ou 3, caractérisé en ce que le joint perforé (3) est interposé entre les deux disques de serrage (7a, 7b), à savoir qu'il est indépendant ou séparé de ces derniers, et en ce qu'il est équipé de moyens d'indexage.

6. Dispositif de filtration selon l'une quelconque des revendications 4 ou 5, caractérisé en ce que le disque de serrage dans lequel n'est pas intégré le joint, ou les deux disques de serrage entre lesquels est interposé le joint, est(sont) équipé(s) d'une grille métallique intégrée dans le(s) disque(s) de serrage.

7. Dispositif de filtration selon la revendication 3, caractérisé en ce que lesdits premier et deuxième disques perforés (7a, 7b) de serrage étanche du (des) filtre(s) (2a, 2b) et du joint perforé (3) font partie intégrante de blocs creux (5a, 5b), qui sont disposés l'un en amont, l'autre en aval, avec les disques (7a, 7b) se faisant face, et qui sont délimités chacun extérieurement par une enveloppe (8a, 8b) sensiblement cylindrique, à partir de laquelle ils font saillie vers l'extérieur, et intérieurement par une surface tronconique (9) dont une portion plane (10) correspond à l'emplacement de chaque disque de serrage (7a, 7b) et une portion oblique (11) correspond à une zone parallèlement à laquelle sont acheminées des portions intermédiaires de ladite première pluralité de tuyaux (12a) qui remontent desdits puits (19) de stockage des échantillons fluides à filtrer ménagés dans ledit bac (20), pour converger vers les perforations du premier disque (7a), alors que les tuyaux (12b) de la deuxième pluralité divergent à partir du deuxième disque (7b), chaque bloc (5a, 5b) présentant une base ouverte, opposée au disque de serrage correspondant (7a, 7b) qui est destinée à être obturée par une plaque amovible (13a, 13b) appliquée dans un premier siège (14) de chaque bloc (5a, 5b) et comportant un nombre de perforations qui est égal à celui des perforations du joint (3), - et donc à celui desdites zones de filtration indépendantes et étanches -, les tuyaux (12a) de ladite première pluralité traversant la plaque (13a) de fermeture du bloc correspondant (5a) et étant reliés à des tubes (21) de prélèvement des échantillons fluides à filtrer, par l'intermédiaire desquels ils communiquent avec les puits de stockage correspondants (19) ménagés dans ledit bac (20).

8. Dispositif de filtration selon la revendication 7, caractérisé en ce qu'au moins les tuyaux (12a) de ladite première pluralité sont maintenus fixes les uns par rapport aux autres à l'aide d'une plaquette en résine (15), - dans laquelle ils sont emprisonnés et qui s'applique de façon étanche dans un deuxième siège (16) du bloc amont (5a), en dessous du disque de serrage correspondant (7a) -, et traversant de façon étanche la plaque amovible (13a), le bloc amont (5a) étant appliqué, lui aussi de façon étanche, sur le bac de stockage (20) de manière que la plaque amovible (13a), - elle aussi appliquée de façon étanche sur son siège (14) -, délimite conjointement avec l'enveloppe (8a) du bloc amont (5a) et l'enveloppe du bac de stockage (20) une chambre étanche (27) dans laquelle est injecté un fluide sous pression par un orifice (28) ménagé dans l'enveloppe du bloc (20), de préférence en aval de la plaque amovible (13a), qui comporte à cet effet une perforation supplémentaire pour le passage du fluide sous pression qui, agissant sur chacun des échantillons fluides à filtrer stockés dans les puits (19) du bac (20), sont refoulés en parallèle vers le(s) filtre(s) (2a,2b) et donc vers ladite deuxième pluralité de tuyaux ( 12b).

9. Dispositif de filtration selon la revendication 7, caractérisé en ce que le bloc de serrage amont (5a) est disposé à la partie inférieure, alors que le bloc aval (5b) est disposé à la partie supérieure, en sorte que la filtration a lieu en sens dit "inversé" (du bas vers le haut), et en ce qu'un dispositif, tel qu'un vérin (38), actionne les blocs, solidarisés entre eux, pour obtenir la fermeture étanche du bac (20).

10. Dispositif d'indexation de filtre destiné à coopérer avec le dispositif selon l'une quelconque des revendications précédentes, caractérisé en ce que le(s) filtre(s) est (sont) fixé(s) à une face d'un (de) badge(s) porte-filtre(s) (29) d'indexage de ce(s) dernier(s) dans une zone (30) entourant une ouverture (31) du(des) badge(s) dans laquelle est (sont) destiné(s) à pénétrer un des (les) disques de serrage précités (7a, 7b), le badge (29) étant destiné à son tour à être introduit dans des encoches (34) d'un rail (32) de guidage et de support ménagées dans deux épaulements latéraux (35) du rail, lui aussi comportant une ouverture (33) correspondant à l'ouverture (31) du badge (29).

11. Dispositif selon la revendication 10, caractérisé en ce que le badge (29) comporte deux trous de centrage (37) de deux plots de centrage du filtre correspondant (2a, 2b), et en ce que ce badge comporte des encoches portées par un moyen détrompeur destinées à coopérer avec le rail (32) pour permettre l'introduction correcte du badge (29) dans ce dernier et connaître la nature du filtre, évitant ainsi les erreurs.

12. Dispositif selon la revendication 11, caractérisé en ce que le(s) filtre(s) (2a, 2b) comporte(nt) des moyens d'indexage, et en ce que le badge porte-filtre (29) ainsi que le(s) bac(s) (20, 60, 61) comporte(nt) des systèmes détrompeurs (65, 63, 64) permettant leur position correcte dans le dispositif de filtration.

13. Dispositif de contrôle du colmatage des zones de filtration d'un filtre destiné à coopérer avec le dispositif selon l'une quelconque des revendications précédentes, caractérisé en ce qu'il comporte en combinaison :
- une pluralité de tubes calibrés borgnes transparents (49) qui sont reliés chacun à une canalisation (48) raccordée à un des tuyaux (12b) contenus dans le bac de serrage aval (5b) et dans lesquels s'accumulent les échantillons au fur et à mesure du filtrage,
- une pluralité d'électrovannes, notamment à trois voies, (47) disposées chacune sur une canalisation (48) débouchant dans un tube calibré transparent (49),
- un dispositif de prises de vues, qui contrôle l'évolution dans le temps de chaque ménisque de niveau dans chacun des tubes calibrés transparents (49) en coopération avec un dispositif de numérisation d'images, et ce par comparaison de l'évolution précitée avec une loi de colmatage de référence à l'aide d'un logiciel d'analyse d'images chargé dans un ordinateur de pilotage - par l'intermédiaire d'un automate programmable - des différentes opérations nécessaires pour le fonctionnement du dispositif de filtration, ce qui permet de détecter une éventuelle diminution du débit de filtration et de commander la fermeture de la (ou des) électrovanne(s) correspondante(s) (47).

14. Dispositif selon la revendication 13, caractérisé en ce que les électrovannes (47) et les tubes calibrés transparents (49) sont disposés dans deux armoires séparées (51, 52), et en ce que ces tubes transparents borgnes (49) sont disposés sur plusieurs niveaux et sont obturés par des bouchons étanches (55) portés chacun par une came (56), l'ensemble des cames (56) correspondant à un niveau de tubes transparents (49) étant relié par un arbre à cames (58) commandé par électro-aimant (57), de façon à ouvrir les tubes calibrés (49) lorsque la quantité d'échantillons à filtrer dépasse la contenance de chaque tube calibré, les échantillons s'écoulant dans un bac de recueil (59) communiquant avec un récipient d'évacuation.

15. Dispositif de filtration selon l'une quelconque des revendications précédentes, caractérisé en ce qu'il comporte, outre au moins ledit bac (20) de stockage d'échantillons, également au moins deux autres types de bacs, à savoir : au moins un bac de rinçage ou coloration ou désinfection des filtres (60) et au moins un bac de rinçage à circulation (61).

16. Dispositif de filtration selon l'une quelconque des revendications 1 ou 2, caractérisé en ce que le(s) filtre(s) avec le joint perforé est (sont) serré(s) entre un premier et un deuxième disque comportant chacun un nombre de perforations égal à celui du joint, à savoir égal au nombre desdites arrivées et sorties d'échantillons fluides, les perforations du premier disque de serrage recevant les extrémités aval d'une pluralité de tuyaux, dont les extrémités amont sont en communication avec des entonnoirs de stockage des échantillons fluides à filtrer, tandis que les perforations du deuxième disque de serrage sont en communication avec une cuvette d'aspiration des échantillons, la filtration se faisant en sens dit "classique" (du haut vers le bas), lesdites extrémités amont des tuyaux précités étant raccordées aux entonnoirs correspondants, notamment par l'intermédiaire d'une plaque perforée de raccordement.

17. Dispositif de filtration selon la revendication 16, caractérisé en ce que lesdits premier et deuxième disques perforés de serrage étanche font partie intégrante de deux blocs de serrage, qui sont disposés l'un en amont, l'autre en aval, avec les disques perforés se faisant face, le bloc amont (supérieur) étant fixe, alors que le bloc aval (inférieur) étant coulissant sous l'action d'un dispositif, tel qu'un vérin ou un levier, agissant sous la cuvette d'aspiration.

18. Dispositif de filtration selon la revendication 17, caractérisé en ce que le bloc amont (supérieur) :
- contient des cônes jetables classiques, disposés dans des alvéoles de support, qui sont destinés à recevoir les échantillons et qui contiennent chacun une bille flottante constituant une sorte de clapet automatique, les cônes jetables communiquant avec des tubes capillaires convergeant vers le disque perforé de serrage correspondant, et
- est équipé d'un couvercle étanche, dans lequel est ménagée une entrée destinée à être reliée à une source de fluide sous pression, ce qui offre -conjointement avec la cuvette d'aspiration précipitée- la possibilité d'effectuer la filtration par mise sous pression et/ou en dépression des échantillons à filtrer.

19. Dispositif de filtration selon la revendication 18, modifié en ce que le bloc amont est réalisé sous la forme d'un bloc entièrement jetable, intégrant à la fois des puits de stockage des échantillons ainsi que des tuyaux de raccord au disque perforé de serrage correspondant.

20. Dispositif de filtration selon l'une quelconque des revendications 16 ou 17, caractérisé en ce que les disques de serrage et la plaque de raccordement sont solidarisées avec une enceinte, notamment cylindrique, et en ce que l'enceinte comporte un couvercle de fermeture étanche de l'enceinte délimitant avec celle-ci et la plaque de raccordement une chambre étanche susceptible d'être mise sous pression, accélérant ainsi la filtration.

21. Procédé de contrôle du colmatage des zones de filtration du dispositif selon l'une quelconque des revendications 13 à 14, caractérisé en ce qu'il comporte une opération de contrôle de la tendance au colmatage de chacune desdites zones de filtration par détection d'une diminution du débit de filtration pour chaque échantillon, à savoir par mesure du volume filtré.

22. Procédé selon la revendication 21, caractérisé en ce que l'opération de contrôle consiste à faire écouler les filtrats correspondants dans des tubes transparents calibrés et à surveiller l'évolution dans le temps de chaque ménisque de niveau de chacun des tubes transparents, à l'aide d'un dispositif de numérisation d'images, et ce par comparaison de l'évolution précitée avec une loi de colmatage de référence, à l'aide d'un logiciel d'analyse d'images chargé dans un ordinateur de pilotage, les tubes calibrés étant obturés par des bouchons amovibles, dont l'ouverture est commandée en cas de besoin, notamment en cas d'évacuation des échantillons filtrés.

23. Procédé selon la revendication 22, caractérisé en ce qu'il comporte en outre une opération de décolmatage d'une ou plusieurs desdites zones de filtration indépendantes et étanches qui est effectuée par inversion alternée de l'écoulement des échantillons en cours de filtration, sous contrôle dudit ordinateur de pilotage, en commandant la fermeture de la vanne (ou des vannes) concernée(s), dès que le colmatage de la zone ou des zones de filtration correspondante(s) a été détecté, tout en commandant également la mise à l'air libre du bac des puits de stockage des échantillons, ce qui entraîne justement une inversion du flux de ces derniers, et en ce que l'inversion de l'écoulement est répétée un certain nombre de fois pendant un temps relativement court mais suffisant pour décolmater la zone ou les zones de filtration précitée(s) qui est (ou qui sont) colmatée(s), la (les) quantité(s) d'échantillon(s) étant le plus petite(s) possible, juste suffisante(s) pour obtenir un décolmatage efficace

## Patentansprüche

1. Vorrichtung zum Filtrieren einer Vielzahl fluider, flüssiger oder gasförmiger Proben (46), die abzufiltrierende Partikel enthalten, wie z.B. Bakterien, Zellen oder andere Bestandteile, die im besonderen in Milch oder Blut enthalten sind, und die folgendes umfaßt:
- mindestens ein Filter (2a, 2b),
- Mittel zum gleichzeitigen Filtrieren der besagten fluiden Proben unabhängig voneinander über dieses selbe Filter
- Mittel zum Filtrieren der Proben unter Krafteinfluß,
wobei diese Vorrichtung zum Filtrieren dadurch gekennzeichnet ist, daß die besagten Mittel zum gleichzeitigen und unabhängigen Filtrieren der fluiden Proben folgendes umfaßt:
- mindestens ein Verbindungsstück (3), das eine Vielzahl von Perforationen (4) besitzt, die über seine gesamte Dicke angeordnet sind,
- ein erstes (7a) und ein zweites (7b) Mittel zum Festklemmen dieses Verbindungsstückes (3) und des Filters (2a), die beide Perforationen aufweisen, welche dafür vorgesehen sind, mit den Perforationen (4) des Verbindungsstückes (3) ausgerichtet zu werden und mit diesen an einem Ende stromaufwärts des Anschlußstückes und unter Dazwischenschalten des besagten Filters (2a) mit einer Anzahl unabhängiger Zuführungen der besagten fluiden, zu filtrierenden Proben in Verbindung gebracht zu werden und, an einem Ende stromabwärts des besagten Verbindungsstückes mit einer Vielzahl von ebenfalls voneinander unabhängigen Ableitungen dieser fluiden Proben in Verbindung gebracht zu werden, wobei die besagten perforierten Mittel zum Festklemmen auf dem Filter (2a) unter Vermittlung des Verbindungsstückes (3) eine Vielzahl von unabhängigen und abgedichteten Zonen zum Filtrieren begrenzen, die den besagten Perforationen entsprechen und die dafür vorgesehen sind, parallel von den besagten fluiden Proben unter dem Einfluß der besagten Mittel zum Filtrieren unter Krafteinfluß durchflossen zu werden, und
- Mittel zur Indexierung des (oder der) Filter(s).

2. Vorrichtung zum Filtrieren gemäß Anspruch 1, dadurch gekennzeichnet, daß ein zweiter Filter (2b) gleichfalls zwischen den stromabwärts gelegenen Enden der Perforationen (4) des Verbindungsstückes (3) und den entsprechenden unabhängigen Ableitungen der Proben dazwischengeschaltet wird, wobei der zweite Filter (2b) eine geringere Porosität aufweist, als der Filter (2a), der stromaufwärts angebracht ist, und das perforierte Verbindungsstück (3) ebenfalls auf dem zweiten Filter (2b) unabhängige und dichte Filtrationszonen abgrenzt.

3. Vorrichtung zum Filtrieren gemäß einem der Ansprüche 1 oder 2, dadurch gekennzeichnet, daß der oder die Filter (2a, 2b) mit dem perforierten Verbindungsstück (3) zwischen eine erste und eine zweite Scheibe (7a, 7b) geklemmt sind, von denen jede eine Anzahl von Perforationen besitzt, die der Anzahl der Perforationen des Verbindungsstückes (3) entspricht, d.h. gleich der Zahl der besagten Zuführungen und Ableitungen der fluiden Proben ist, wobei die Perforationen der ersten Klemmscheibe (7a) die stromabwärts gelegenen Enden einer ersten Gruppe einer Vielzahl von Leitungen (12a) aufnehmen, deren stromaufwärts gelegene Enden mit den Speicherschächten (19) der zu filtrierenden fluiden Proben (46) in Verbindung stehen, welche in einem Speicherbehälter (20) eingerichtet sind, während dagegen die Perforationen der zweiten Klemmscheibe (7b) die stromaufwärts gelegenen Enden einer zweiten Gruppe einer Vielzahl von Leitungen ( 12b) aufnehmen, wobei die Perforationen (4) des Anschlußstückes (3) und die besagten entsprechenden Filtrationszonen des oder der Filter(s) (2a, 2b) für die Verbindung zwischen der besagten ersten und der besagten zweiten Gruppe einer Vielzahl von Leitungen (12a, 12b) sorgen, von denen die erste (12a) dafür vorgesehen ist, die verschiedenen fluiden Proben vor der Filtration zu dem oder den Filter(n) (2a, 2b) zu führen,- unter dem Einfluß der besagten Mittel, die Druck auf diese fluiden Proben, welche in den besagten Speicherschächten (19) enthalten sind, ausüben, und zwar in Richtung auf die Leitungen (12a), die der ersten Gruppe einer Vielzahl entsprechen - während die zweite Gruppe einer Vielzahl von Leitungen (12b) dafür vorgesehen ist, die fluiden Proben nach der Filtration zu befördem.

4. Vorrichtung zum Filtrieren gemäß Anspruch 1, dadurch gekennzeichnet, daß dann, wenn nur ein einziger Filter (2a oder 2b) benutzt wird, das perforierte Verbindungsstück (3) in eine der beiden Klemmscheiben (7a oder 7b) integriert ist, und dadurch, daß das Verbindungsstück (3) zwei Gruppen einer Vielzahl von Rippen umfaßt, die von einer seiner Hauptseiten hervorstehen, d.h., von der Seite, die zur Klemmscheibe hin gerichtet ist, von denen die erste Gruppe der Vielzahl von Rippen ringförmige Dichtungsrippen umfaßt, die dafür vorgesehen sind, daß sich eine jede um eine der Perforationen der entsprechenden Klemmscheibe legt, während die zweite Gruppe der Vielzahl von Rippen Verbindungsrippen umfaßt, die zwischen den ringförmigen Dichtungsrippen ausgebildet sind und eine Art von quadratischem Liniennetz bestimmen und dafür vorgesehen sind, sich in die komplementären Rillen der Scheibe einzupassen.

5. Vorrichtung zum Filtrieren gemäß einem der Ansprüche 2 oder 3, dadurch gekennzeichnet, daß das perforierte Verbindungsstück (3) zwischen den zwei Klemmscheiben (7a, 7b) angebracht ist, d.h., daß es unabhängig oder getrennt von den beiden letzteren ist, und dadurch, daß es mit Mitteln zur Indexierung versehen ist.

6. Vorrichtung zum Filtrieren gemäß einem der Ansprüche 4 oder 5, dadurch gekennzeichnet, daß die Klemmscheibe, in die das Verbindungsstück nicht integriert ist, oder die beiden Klemmscheiben, zwischen denen das Verbindungsstück angebracht ist, mit einem metallischem Gitter ausgerüstet ist (sind), das in die Klemmscheibe(n) integriert ist.

7. Vorrichtung zum Filtrieren gemäß Anspruch 3, dadurch gekennzeichnet, daß die besagte erste und zweite perforierte Scheibe (7a, 7b) zum dichten Klemmen des (der) Filter (2a, 2b) und des perforierten Verbindungsstückes (3) einen wesentlichen Bestandteil von hohlen Blöcken (5a, 5b) darstellen, von denen einer stromaufwärts und der andere stromabwärts, mit den Scheiben einander gegenüberstehend angebracht ist, und von denen jeder nach außen durch eine exakt zylindrische Umhüllung (8a, 8b), von der aus sie nach außen hervorstehen,begrenz wird und nach innen durch eine kegelstumpfförmige Fläche (9), von der ein ebener Teil (10) dem Platz einer jeden Klemmscheibe (7a, 7b) entspricht und ein schräger Teil (11) parallel einer Zone entspricht, zu der die Zwischenteile der besagten ersten Gruppe einer Vielzahl von Leitungen (12a) führen, die von den besagten Speicherschächten (19) der zu filtrierenden fluiden Proben ansteigen, die in dem besagten Behälter (20) eingerichtet sind, um zu den Perforationen der ersten Scheibe (7a) zusammen zu führen, während die zweite Gruppe einer Vielzahl von Leitungen von der zweiten Scheibe (7b) aus auseinanderläuft, wobei jeder Block (5a, 5b) eine offene Basis, der korrespondierenden Klemmscheibe (7a, 7b) gegenübergelegen, zeigt, die dafür vorgesehen ist, mit einer auswechselbaren Platte (13a, 13b) verschlossen zu werden, die in einem ersten Sitz (14) eines jeden Blocks (5a, 5b) eingepaßt ist und eine Anzahl von Perforationen umfaßt, die der Anzahl der Perforationen des Verbindungsstückes (3) entspricht,- und damit der Anzahl der besagten unabhängigen und abgedichteten Filtrationszonen -, wobei die Leitungen (12a) der besagten ersten Gruppe die Verschlußplatte (13a) des entsprechenden Blocks (5a) durchqueren und mit den Röhren (21 ) zum Fördern der zu filtrierenden fluiden Proben verbunden sind, durch deren Vermittlung sie mit den entsprechenden Speicherschächten (19), die in dem besagten Behälter (20) eingerichtet sind, in Verbindung stehen.

8. Vorrichtung zum Filtrieren gemäß Anspruch 7, dadurch gekennzeichnet, daß zumindest von den einen Leitungen (12a) der besagten ersten Gruppe einer Vielzahl von Leitungen die einen im Bezug zu den anderen durch ein Plättchen aus Harz (15) festgehalten werden - in das sie eingesperrt sind und das sich dicht in einen zweiten Sitz (16) des stromaufwärts gelegenen Blockes (5a), unterhalb der entsprechenden Klemmscheibe (7a), anlegt -, und dicht die auswechselbare Platte (13a), den stromaufwärts gelegenen Block (5a), der ebenfalls dicht über dem Vorratsbehälter (20) anliegt, ebenso wie die auswechselbare Platte (13a), durchqueren, - diese liegt ebenfalls dicht in ihrem Sitz (14) an -, und das zusammen mit der Umhüllung (8a) des stromaufwärts gelegenen Blockes (5a) und der Umhüllung des Speicherbehälters (20) eine dichte Kammer begrenzt, in die unter Druck durch eine Öffnung (28), die in der Umhüllung des Blockes (20) eingerichtet ist, eine fluide Probe eingespritzt wird, vorzugsweise stromaufwärts von der auswechselbaren Platte (13a), die zu diesem Zweck eine zusätzliche Perforation zum Durchfluß des Fluides unter Druck besitzt, bei der es sich um jede der zu filtrierenden fluiden Proben handeln kann, die in den Speicherschächten (19) des Behälters (20) gelagert sind, die parallel in Richtung auf den (die) Filter (2a, 2b) und dann zu der zweiten Gruppe mehrerer Leitungen (12b) gefördert werden.

9. Vorrichtung zum Filieren gemäß Anspruch 7, dadurch gekennzeichnet, daß der stromaufwärts gelegene Klemmblock (5a) im unteren Teil angeordnet ist, während der stromabwärts gelegene Block (5b) im oberen Teil angeordnet ist, in der Art, daß die Filtration in sogenannter "inverser" Richtung stattfindet (von unten nach oben) und dadurch, daß eine Vorrichtung, wie eine Winde (38) die Blöcke betreibt, die miteinander wechselwirken, um ein dichtes Verschließen des Behälters (20) zu erreichen.

10. Mittel zur Indexierung von Filtern, das dazu vorgesehen ist, mit der Vorrichtung gemäß einem der vorherigen Ansprüche zusammenzuarbeiten, dadurch gekennzeichnet, daß der (die) Filter auf einer Seite von (einer) filtertragenden, Karte(n) (29) zu Indexierung der letzteren in einer Zone (30), die eine Öffnung (31 ) der Karte(n) umgibt, befestigt sind, die dafür vorgesehen ist, daß in ihr eine der (die) vorgenannten Klemmscheiben (7a, 7b) durchdrungen wird (werden), wobei die Karte ihrerseits dafür vorgesehen ist, in die Kerben (34) einer Führungs- und Unterstützungsschiene (32) eingeführt zu werden, die in zwei seitlichen Widerlagern (35) der Schiene ausgebildet sind, wobei diese ebenfalls eine Öffnung (33) besitzt, die der Öffnung (21) der Karte (29) entspricht.

11. Vorrichtung gemäß Anspruch 10, dadurch gekennzeichnet, daß die Karte (29) zwei Zentrierlöcher (37) von zwei Zentrierkontakten des korrespondierenden Filters (2a, 2b) umfaßt, und daß diese Karte Kerben umfaßt, die von einem weichgeglühtem Material getragen werden und die dazu vorgesehen sind, mit der Schiene (32) zusammenzuwirken, um das korrekte Einführen der Karte (29) in letztere zu ermöglichen und die Art des Filters zu erkennen, um so Fehler zu vermeiden.

12. Vorrichtung gemäß Anspruch 11, dadurch gekennzeichnet, daß der (die) Filter (2a, 2b) Mittel zur Indexierung umfaßt (umfassen), und dadurch, daß die filtertragende Karte (29) ebenso wie der (die) Behälter (20, 60, 61) Markierungssysteme (65, 63, 64) besitzt (besitzen), die ihre korrekte Stellung in der Vorrichtung zur Filtrierung ermöglichen.

13. Vorrichtung zur Kontrolle des Verstopfungsgrades der Filtrationszonen eines Filters, der dafür vorgesehen ist, mit der Vorrichtung gemäß einem der vorherigen Ansprüche zusammenzuwirken, dadurch gekennzeichnet, daß sie als Kombination folgendes umfaßt:
- eine Vielzahl von kalibrierten, trüben transparenten Rohren (49), von denen jedes mit einem Leitungsnetz (48) verbunden ist, das an eine der Leitungen (12b) angeschlossen ist, die in dem stromabwärts gelegenen Klemmbehälter (5b) enthalten sind und in denen sich die Proben entsprechend der Filtration ansammeln,
- eine Vielzahl von Magnetventilen, bevorzugt Drei-Wege-Ventile (47), von denen jedes über einem Leitungsnetz (48) angebracht ist und in einem kalibrierten, transparenten Rohr (49) mündet,
- eine Vorrichtung zum Beobachten, die den zeitlichen Verlauf des Niveaus eines jeden Meniskus in jedem der kalibrierten, transparenten Rohre (49) durch Zusammenwirken mit einer Vorrichtung zur digitalisierten Darstellung kontrolliert, und zwar durch Vergleich des vorher erwähnten Verlaufes mit einer Gesetzmäßigkeit des Verstopfungsgrades als Referenz, mit Hilfe eines Programmes zur Bildanalyse, das in einem Prozeßleitrechner geladen ist - unter Dazwischenschalten eines programmierbaren Gerätes - und den unterschiedlichen Maßnahmen, die zum Funktionieren der Vorrichtung zum Filtrieren notwendig sind, was es erlaubt, eine eventuelle Verringerung des Umsatzes der Filtration zu erkennen und das Schließen des (oder der) entsprechenden Magnetventile(s) (47) zu veranlassen.

14. Vorrichtung gemäß Anspruch 13, dadurch gekennzeichnet, daß die Magnetventile (47) und die kalibrierten transparenten Rohre (49) in zwei getrennten Schränken (51, 52) angeordnet sind, und dadurch, daß diese trüben transparenten Rohre (49) über mehrere Niveaus angeordnet sind und durch dichte Stopfen (55) verschlossen sind, die alle von einem Nocken (56) getragen werden; sämtliche Nocken entsprechen einem Niveau der transparenten Rohre und stehen durch eine Nockenwelle (58) miteinander in Verbindung, welche von einem Elektromagneten (57) kontrolliert wird, so daß die kalibrierten Rohre (49) geöffnet werden wenn die Menge der zu filtrierenden Proben das Fassungsvermögen eines jeden kalibrierten Rohres übertrifft und die Proben sich in einen Auffangbehälter (59) ergießen, der mit einem Vakuumgefäß in Verbindung steht.

15. Vorrichtung zum Filtrieren gemäß irgendeinem der vorgehenden Ansprüche, dadurch gekennzeichnet, daß sie über mindestens den besagten Vorratsbehälter für die Proben (20) hinaus gleichzeitig mindestens zwei andere Arten von Behältern umfaßt, d.h.: mindestens einen Behälter zum Spülen oder Färben oder Desinfizieren der Filter (60) und mindestens einen Behälter zum Spülen im Umlauf (61).

16. Vorrichtung zum Filieren gemäß einem der Ansprüche 1 oder 2, dadurch gekennzeichnet, daß der (die) Filter mit dem perforierten Verbindungsstück zwischen eine erste und eine zweite Scheibe geklemmt ist (sind), von denen jede die gleiche Anzahl an Perforationen besitzt, die der des Verbindungsstückes entspricht, d.h., die Anzahl entspricht der Zahl der besagten Zuführungen und Ableitungen der fluiden Proben, wobei die Perforationen der ersten Klemmscheibe die stromabwärts gelegenen Enden einer Vielzahl von Leitungen aufnehmen, deren stromaufwärts gelegene Enden mit den Zulauftrichtern der Speicher der zu filtrierenden fluiden Proben in Verbindung stehen, während die Perforationen der zweiten Klemmscheibe mit einer Küvette zum Aufsaugen der Proben in Verbindung stehen, die Filtration verläuft im sogenannten klassischen Sinn (von oben nach unten), wobei die besagten stromaufwärts gelegenen Enden der vorher erwähnten Leitungen mit den entsprechenden Zulauftrichtern verbunden sind, im besonderen über eine perforierte Verbindungsplatte.

17. Vorrichtung zum Filtrieren gemäß Anspruch 16, dadurch gekennzeichnet, daß die besagte erste und zweite perforierte Scheibe zum dichten Klemmen wesentlicher Bestandteil von zwei Klemmblocks sind, von denen einer stromaufwärts, der andere stromabwärts angebracht ist, und zwar mit den perforierten Scheiben einander gegenüber, wobei der stromaufwärts gelegene (obere) Block fest ist, während der stromabwärts gelegene (untere) Block unter dem Einfluß einer Vorrichtung, wie einer Winde oder einem Hebel, die unter der Saugküvette wirken, verschiebbar ist.

18. Vorrichtung zum Filieren gemäß Anspruch 17, dadurch gekennzeichnet, daß der stromaufwärts gelegene (obere) Block:
- konventionelle wegwerfbare Konusse umfaßt, die in den Trägerzellen angeordnet sind, die dafür vorgesehen sind, die Proben aufzunehmen und von denen jeder eine schwimmende Kugel enthält, die eine Art von automatischem Klappenventil darstellt, wobei die wegwerfbaren Konusse mit den kapillaren Rohren zusammenwirken, die zu der entsprechenden perforierten Klemmscheibe zusammenlaufen, und
- mit einem dichten Deckel ausgestattet ist, in den ein Eingang eingearbeitet ist, der dafür vorgesehen ist, mit einer Quelle von Flüssigkeit unter Druck verbunden zu werden und der die Möglichkeit bietet, - gemeinsam mit der herausgefallenen Saugküvette - eine Filtration durchzuführen, indem die zu filtrierenden Proben unter Druck und/oder unter Unterdruck gesetzt werden.

19. Vorrichtung zum Filieren gemäß Anspruch 18, modifiziert dadurch, daß der stromaufwärts gelegene Block in Form eines komplett wegwerfbaren Blockes realisiert wird, der gleichzeitig die Speicherschächte der Proben enthält, ebenso wie die Verbindungsleitungen zur entsprechenden perforierten Klemmscheibe.

20. Vorrichtung zum Filieren gemäß einem der Ansprüche 16 oder 17, dadurch gekennzeichnet, daß die Klemmscheiben und die Verbindungsscheibe mit einem Behälter fest verbunden sind, im besonderem mit einem zylindrischen Behälter, und dadurch, daß der Behälter einen dichten Deckel zum Verschließen des Behälters umfaßt und mit diesem und der Verbindungsplatte eine dichte Kammer begrenzt, die unter Druck gesetzt werden kann, um auf diese Weise die Filtration zu beschleunigen.

21. Verfahren zur Kontrolle des Verstopfungsgrades der Filtrationszonen der Vorrichtung gemäß einem der Ansprüche 13 bis 14, dadurch gekennzeichnet, daß es einen Arbeitsschritt zur Kontrolle des Grades der Verstopfung einer jeden der besagten Filtrationszonen umfaßt, indem es eine Verringerung des Umsatzes der Filtration für jede Probe detektiert, und zwar durch Messung des filtrierten Volumens.

22. Verfahren gemäß Anspruch 21, dadurch gekennzeichnet, daß der Kontrollschritt darin besteht, die entsprechenden Filtrate in transparente kalibrierte Rohre laufen zu lassen und den zeitlichen Verlauf des Niveaus eines jeden Meniskus in jedem der transparenten Rohre, mit Hilfe einer Vorrichtung zur digitalisierten Darstellung zu verfolgen und zwar durch den Vergleich des vorgenannten Verlaufes mit einer Gesetzmäßigkeit des Verstopfungagrades mit Hilfe eines Programmes zur Bildanalyse, das in einem Prozeßleitrechner geladen ist, wobei die kalibrierten Rohre durch auswechselbare Stopfen verschlossen sind, deren Öffnung dann, wenn es notwendig ist, veranlaßt wird, besonders im Falle einer Evakuierung der filierten Proben.

23. Verfahren gemäß Anspruch 22, dadurch gekennzeichnet, daß es außerdem einen Arbeitsschritt zum Durchlässigmachen einer oder mehrerer der besagten unabhängigen und dichten Filtrationszonen umfaßt, der durch abwechseinde Umkehrung der Strömungsrichtung der Proben im Laufe der Filtration bewirkt wird, unter der Kontrolle des besagten Prozeßleitrechners, der das Schließen des (oder der) betreffenden Ventile(s) veranlaßt, sobald der Verstopfungsgrad der entsprechenden Filtrationszone oder der Filtrationszonen detektiert worden ist, und zwar indem er ebenfalls das Freisetzen des Behälters der Speicherschächte der Proben an die Luft veranlaßt, was genau eine Inversion des Flusses der Letzteren bewirkt, und dadurch, daß die Inversion der Strömungsrichtung in einer gewissen Häufigkeit während einer relativ kurzen Zeit wiederholt wird, die aber ausreicht, die vorher erwähnte(n) Filtrationszone oder die Filtrationszonen, die verstopft ist (oder die verstopft sind), wieder durchlässig zu machen, ist die Menge an Probe(n) die kleinste, die möglich ist, gerade ausreichend, um ein wirksames Durchlässigmachen zu bewirken.

## Claims

1. Apparatus for filtering a plurality of liquid or gas fluid samples (46) containing particles to be filtered such as bacteria, cells, or other items, particularly as contained in milk or blood, the apparatus comprising:
. at least one filter (2a, 2b);
. means for simultaneous and independent filtering of said fluid samples on the same filter;
. means for forced filtering of samples;
the said filter apparatus being characterized in that the said means for simultaneous and independent filtering fluid samples comprise:
. at least one gasket (3) which includes a plurality of through perforations (4);
. a first (7a) and a second (7b) means of clamping the gasket (3) and the filter (2a) in a fluid-tight manner, the clamping means having perforations which are lined up with the perforations (4) through the gasket (3) and which, with these gasket perforations, are put in communication at an end upstream of the gasket and through the interposition of the said filter (2a), with a plurality of independent inlets of the said sample fluids to be filtered, and, at an end downstream of the said gasket (3), with a plurality of similarly independent outlets for said fluid samples, the said perforated clamping means delimiting a plurality of independent and mutually sealed filter zones on the filter (2a) and corresponding to said perforations, which can be passed through in parallel by the said fluid samples under the action of the said means for forced filtration; and
. means for indexing filter(s)

2. Filter apparatus according to claim 1, characterized in that a second filter (2b) is also interposed between the downstream ends of the perforations (4) through the gasket (3) and the corresponding independent sample outlets, the pore size of the second filter (2b) being smaller than that of the filter (2a) disposed upstream, the perforated gasket (3) likewise delimiting filter zones on the second filter (2b) which are independent and mutually sealed.

3. Filter apparatus according to claim 1 or 2, characterized in that the filter(s) (2a, 2b) and the perforated gasket (3) are clamped between first and second disks (7a, 7b) each containing a number of perforations equal to the number of perforations through the gasket (3), i.e. equal to the number of said fluid sample inlets and outlets, the perforations through the first clamping disk (7a) receiving the downstream ends of a first plurality of pipes (12a) whose upstream ends are in communication with wells (19) formed in a storage tray (20) for storing the samples (46) of fluid to be filtered, while the perforations through the second clamping disk (7b) receive the upstream ends of a second plurality of pipes (12b), the perforations (4) through the gasket (3) and said corresponding filter zones of the filter(s) (2a, 2b) providing continuity between the first and second pluralities of pipes (12a, 12b), with the first plurality (12a) being designed to convey the various samples of fluid to the filter(s) (2a, 2b) prior to filtering under the action of said means for putting said fluid samples contained in said storage wells (19) under pressure, urging them into the pipes (12a) corresponding to said first plurality, while the second plurality of pipes (12b) is designed to convey the fluid samples after filtering.

4. Filter apparatus according to claim 1, characterized in that when only a single filter (2a or 2b) is used, the perforated gasket (3) is integrated in one of the two clamping disks (7a or 7b), and in that the gasket (3) includes two pluralities of ribs projecting from one of its main faces, namely its face facing the clamping disk, a first one of said pluralities comprising annular sealing ribs for applying around each of the perforations through the corresponding clamping disk, while a second of said pluralities comprises assembly ribs disposed between the annular sealing ribs and defining a kind of grid for engaging in complementary grooves in the disk.

5. Filter apparatus according to claim 2 or 3, characterized in that the perforated gasket (3) is interposed between the two clamping disks (7a, 7b) i.e. it is independent or separate from said clamping disks, and in that it is fitted with indexing means.

6. Filter apparatus according to claim 4 or 5, characterized in that the clamping disk in which the gasket is not integrated, or both clamping disks when the gasket is interposed therebetween, is/are fitted with a metal grid integrated in the clamping disk(s).

7. Filter apparatus according to claim 3, characterized in that said first and second perforated disks (7a, 7b) for providing sealed clamping of the filter(s) (2a, 2b) and of the perforated gasket (3) constitute integral portions of hollow blocks (5a, 5b), one of which is disposed upstream and the other downstream, with the disks (7a, 7b) facing each other, each block being externally delimited by a substantially cylindrical enclosure (8a, 8b) with the disks projecting outwardly therefrom, and being internally delimited by a frustoconical surface (9) having a plane portion (10) corresponding to the location of the clamping disk (7a, 7b) and a sloping portion (11) corresponding to a zone parallel to which extend intermediate portions of said first plurality of pipes (12a) bringing up samples of fluid to be filtered from said storage wells (19) in said tray (20) to converge on the perforations in the first disk (7a), with the pipes (12b) of the second plurality diverging from the second disk (7b), each block (5a, 5b) having an open base at its end opposite from the corresponding clamping disk (7a, 7b) and suitable for being closed by a removable plate (13a, 13b) engaged in a first seat (14) in each block (5a, 5b) and having the same number of perforations as the gasket (3), which number corresponds to the number of said independent and mutually sealed filter zones, the pipes (12a) of said first plurality passing through the closure plate (13a) of the corresponding block (5a) and being connected to tubes (21) for taking the samples of fluid to be filtered, via which they communicate with the corresponding storage wells (19) provided in said tray (20).

8. Filter apparatus according to claim 7, characterized in that at least the pipes (12a) of said first plurality are held fixed relative to one another by means of a resin plate (15) in which they are imprisoned and which bears in sealed manner in a second seat (16) in the upstream block (5a) beneath the corresponding clamping disk (5a), and pass in sealed manner through the removable plate (13a), with the upstream block (5a) being applied, also in sealed manner, against the storage tray (20) so that the removable plate (13a) which is also applied in sealed manner against its seat (14) cooperates with the enclosure (8a) of the upstream block (5a) and with the enclosure of the storage tray (20) to delimit a sealed chamber (27) into which a fluid under pressure is injected via an orifice (29) provided through the enclosure of the block (5a), preferably downstream from the removable plate (13a), which block includes for this purpose an additional perforation to pass the fluid under pressure, which fluid by acting on each of the samples of fluid to be filtered stored in the wells (19) of the tray (20) causes the samples to be urged in parallel towards the filter(s) (2a, 2b), and thus towards said second plurality of pipes (12b).

9. Filter apparatus according to claim 7, characterized in that the upstream clamping block (5a) is disposed beneath the downstream clamping block (5b) which is disposed above it, such that filtering takes place in the "reverse" direction (i.e. upwards), and in that a device such as an actuator (38) thrusts against the interconnected blocks to obtain sealed closure of the tray (20).

10. Apparatus for indexing the filter, for co-operating with apparatus according to any preceding claim, characterized in that the, or each, filter is fixed to one face of a filter-carrying card (29) for indexing said filter in a zone (30) surrounding an opening (31) through the card into which one of said clamping disks (7a, 7b) is intended to penetrate, the card (29) being in turn designed for insertion in notches (34) in a guide and support rail (32) provided in two lateral shoulders (35) of the rail, which rail likewise includes an opening (33) corresponding to the opening (31) in the card (29).

11. Filter apparatus according to claim 10, characterized in that the card (29) has two centering holes (37) for receiving two studs to center the corresponding filter (2a, 2b), and in that the card also includes notches carried by keying means for co-operating with the rail (32) to enable the card (29) to be inserted properly into the rail and to enable the nature of the filter to be known, thereby avoiding errors.

12. Filter apparatus according to claim 1 or 2, characterized in that each filter (2a, 2b) includes indexing means, and in that each filter-carrying card (29) and each tray (20, 60, 62) includes keying means (65, 63, 64) ensuring that they are properly positioned in the filter apparatus.

13. Apparatus for monitoring the clogging of filter zones in a filter, for co-operating with apparatus according to any preceding claim, characterized in that it comprises in combination:
a plurality of transparent blind calibrated tubes (49) each of which is connected to a duct (48) connected to one of the pipes (12b) contained in the downstream clamping block (5b) and in which the samples accumulate during filtering;
a plurality of electrically-controlled valves, in particular three-way valves (47), each disposed on one of the ducts (48) opening out into a transparent calibrated tube (49); and
a camera which monitors the movement of each level meniscus in each transparent calibrated tube (49) in cooperation with an image digitizing device, with the movement being monitored in comparison with a reference clogging law by means of image-analyzing software loaded in an overseeing computer which governs the various operations required to run the filter apparatus via a programmable driver, thereby making it possible to detect any possible reduction in filter flow rate and to cause the corresponding electrically-controlled valve(s) (47) to be closed.

14. Filter apparatus according to claim 13, characterized in that the electrically-controlled valves (47) and the transparent calibrated tubes (49) are disposed in two separate cabinets (51, 52), and in that the blind transparent tubes (49) are disposed on a plurality of levels and are closed by liquid tight plugs (55) each carried by a cam (56), the set of cams (56) on any given level of transparent tubes (49) being controlled by a cam shaft (49) itself controlled by an electromagnet (57) so as to enable the calibrated tubes (49) to be opened when the samples to be filtered exceed the capacity of the calibrated tubes, the samples running away into a collection gutter (59) communicating with a drainage receptacle.

15. Filter apparatus according to any preceding claim, characterized in that it includes, in addition at least to said sample storage tray (20), at least two other types of tray, namely at least one tray (60) for washing or staining or disinfecting the filters, and at least one tray (61) for washing the pipework.

16. Filter apparatus according to claim 1 or 2, characterized in that together with the perforated gasket, the filter(s) is/are clamped between a first disk and a second disk each including a number of perforations equal to the number of perforations in the gasket, i.e. equal to the number of said inlets and outlets for fluid samples, the perforations in the first clamping disk receiving the downstream ends of a plurality of pipes whose upstream ends are in communication with funnels for storing samples of fluid to be filtered, while the perforations in the second clamping disk are in communication with a sample suction cup, filtering taking place in the "conventional" direction (i.e. downwards), said upstream ends of the above-mentioned pipes being connected to corresponding ones of the funnels, in particular via a perforated connection plate.

17. Filter apparatus according to claim 16, characterized in that said first and second sealed perforated clamping disks constitute integral portions of two clamping blocks one of which is disposed upstream and the other downstream, with the perforated disks facing each other, the (upper) upstream block being fixed while the (lower) downstream block being slidable under drive from a device such as an actuator or a lever acting beneath the suction cup.

18. Filter apparatus according to claim 17, characterized in that the (upper) upstream block:
contains conventional disposable cones disposed in support cells which are designed to receive the samples and each of which contains a floating bead constituting a kind of automatic shut-off valve, the disposable cones communicating with capillary tubes converging on the corresponding perforated clamping disks; and
is fitted with a sealed lid having an inlet formed therethrough for connection to a source of fluid under pressure which fluid co-operates with the above-mentioned suction cup to make it possible to perform filtering by applying pressure and/or suction to the samples to be filtered.

19. Filter apparatus according to claim 18, modified in that the upstream block is made in the form of a block suitable for discarding as a whole, integrating both the sample storage wells and the pipes connecting them to the corresponding perforated clamping disks.

20. Filter apparatus according to claim 16 or 17, characterized in that the clamping disks and the connection plate are fixed to an enclosure, in particular a cylindrical enclosure, and in that the enclosure includes a sealed closure lid for the enclosure cooperating therewith and with the connection plate to delimit a sealed chamber suitable for being put under pressure, thereby accelerating filtering.

21. A method of monitoring the clogging of filter zones according to any one of claims 13 to 14, the method being characterized in that it comprises a step of monitoring the tendency during filtering of each of said above-mentioned filter zones to become clogged, through detecting the reduction in filter flow rate for each sample, ie by measuring the filtered volume.

22. A method according to claim 21, characterized in that the step of monitoring consists in causing the corresponding filtrates to flow into transparent tubes, in monitoring the movement of the level meniscus in each of the transparent tubes by means of image digitizing apparatus, and in comparing the above-mentioned movement with reference clogging behavior by means of image analyzing software loaded into an overseeing computer, the calibrated tubes being closed by removable plugs, which are opened when required, particularly for draining away filtered samples.

23. A method according to claim 22, characterized in that it further includes an operation of unclogging one or more of said independent and mutually sealed filtered zones by alternating reversal of the sample flow direction during filtering under the control of said overseeing computer by closing the valve or valves concerned whenever clogging of the corresponding filter zone is detected, while simultaneously causing the tray of sample storage wells to be connected to the atmosphere, thereby causing flow direction through the wells to be reversed, and in that flow direction reversal is repeated a certain number of times during a relatively short period of time which is nevertheless sufficient to unclog the above-mentioned filter zone(s) that has/have become clogged, using the smallest possible sample quantities for ensuring that effective unclogging occurs.
